# EUROPEAN PATENT APPLICATION

(11) **EP 2 570 848 A1**
(43) Date of publication of application: **20.03.2013**
(21) Application number: 11780577.0
(22) Date of filing: 09.05.2011
(51) Int. Cl.: G02F 1/167

(54) **ELECTROPHORESIS DISPLAY DEVICE, METHOD FOR MANUFACTURING ELECTROPHORESIS DISPLAY DEVICE, AND METHOD FOR MANUFACTURING BASE MATERIAL PROVIDED WITH ADHESIVE LAYER**

(30) Priority: 14.05.2010 JP 2010111941; 14.06.2010 JP 2010134957; 30.07.2010 JP 2010172673; 02.08.2010 JP 2010173713; 20.08.2010 JP 2010184979
(71) Applicant: Mitsubishi Pencil Company, Limited, Tokyo 140-8537 (JP)
(72) Inventor: KATO, Daisen, Fujioka-shi Gunma 375-8501 (JP)
(74) Representative: Vossius & Partner
(86) International application number: PCT/JP2011/060665
(87) International publication number: WO 2011/142320

(57) **Abstract**

Provided is a method for manufacturing an electrophoresis display device capable of, even if electrophoresis ink is used, suppressing deterioration of adhesion between the upper surface of a structure and a counter electrode substrate and improving structural durability and display durability of the electrophoresis display device. The method includes: a step of forming a plurality of cells on a first electrode substrate, each of the cells being composed of an insulating structure; a step of heating a film base material with a thermoplastic adhesive layer formed on the surface, in such a state that the film base material is in contact with the upper surface of the structure and peeling the film base material in such a state that the adhesive layer is softened, thereby transferring the adhesive layer to the front surface of the structure; a step of filling the cells with the electrophoresis ink; and a step of bonding the upper surface of the structure and a second electrode substrate to each other while heating the upper surface and the second electrode substrate at a temperature lower than that in the adhesive layer transferring step.

## Description

### Technical Field

The present invention reflates to an electrophoresis display device capable of changing the visibility reversibly by the action of the electric field or the like, a method for manufacturing the electrophoresis display device, and a method for manufacturing a base material provided with an adhesive layer.

### Background Art

Recently, there are growing demands for lower power consumption, thinner and lightweight profile, flexibility and the like of a display device, and as one example, attention has been focused on electronic paper. Such electronic paper is known, for example, as being used in an electrophoresis display device using electrophoresis ink. The electrophoresis display device is provided such that two electrode substrates are placed opposite to each other, each of the electrode substrates having at least one transparent surface and electrophoresis ink is provided between the opposite electrodes thereby to compose a display panel. Then, an electric field is applied to the display panel thereby to create a display on a transparent electrode surface.

The electrophoresis display device is a display medium capable of obtaining a desired display by controlling a direction of the electric field and becomes a focus of attention as it has merits of low costs, a wide viewing angle which is as wide as typical printings, lower power consumption, provision of a display memory and the like. However, there is a problem of electrophoresis particles used in the electrophoresis ink such that display is susceptible to deterioration as the particles are easy to flocculate due to long storage and the particles are maldistributed after repeated displaying. Therefore, there is provided a method for suppressing flocculation and maldistribution of the particles of the electrophoresis ink by charging the electrophoresis ink into a large number of small cells finely separated from each other.

The cells are formed, for example, by using a micro capsule, emboss, photoresist and the like. However, if the cells are formed by a method other than the micro capsule, in order to suppress flocculation and maldistribution of the particles, there is a need to adhere a structure (called spacer, column, rib or the like) formed on one substrate to the other substrate by an adhesive agent or the like without any gap created therebetween. Then, there has been proposed a method of adhering the upper surface of the structure to the opposite substrate by an adhesive agent (for example, see the patent literatures 1 and 2).

Further, there has been proposed a method of applying an adhesive agent to the upper surface of the structure by screen printing or inkj et, however this method has problems of inaccurate positioning and complicated steps. In the meantime, in order to form the adhesive agent on the upper surface of the structure selectively, there has been also proposed a method of bringing a transfer roll with the adhesive agent adhered to the surface thereof into contact with the upper surface of a partition wall thereby to transfer and form the adhesive agent (for example, see the patent literature 1).

By the way, as a technique of applying coating liquid into fine parts, for example, there are known screen printing and inkjet methods. These techniques are used in manufacturing of a printing circuit, a liquid crystal display and the like.

As one example of applying coating liquid to a fine part, there is a case of applying the adhesive agent as coating liquid to the upper surface of the structure provided on a base material in a standing manner so as to bond the base material to another base material with a fixed gap created therebetween. In this case, the base material and the structure to be coated are fixed with use of the adhesive agent.

The patent literature 1 has proposed, as a method of applying an adhesive agent to a spacer of an electrophoresis display panel, a method of applying the adhesive agent to the upper surface of the spacer by rotating a transfer roll with the adhesive agent adhered to the surface and moving the transfer roll relative to the base material on which the spacer is formed.

Besides, the patent literature 3 proposes as the method for coating an adhesive agent on a spacer of the electrophoresis display panel, a method of transferring a hot-melt adhesive agent that is solid in a normal state and exhibits adhesion on a certain condition.

### Citation List

### Patent Literature

Patent Literature 1: Japanese Patent Application Publication no. 2006-184893
Patent Literature 2: Japanese Patent Application Publication no. 2009-251214
Patent Literature 3: Japanese Patent Application Publication no. 2008-225063

### Summary of Invention

### Technical Problem

The configuration of the patent literature 1 is predicated on the fact the charged particles fly in the vapor phase. However, if the electrophoresis ink is used and the adhesive agent is applied by screen printing to the substrate provided with structure to which the electrophoresis ink is applied in advance, then, the applied electrophoresis ink and the screenplate come into contact, which causes a problem of lack of uniformity of charged ink. Besides, even if non-contact printing method is employed such as inkjet, miscibility and mixing of the electrophoresis ink and adhesive agent cause adhesion failure, which finally results in a problem of reduction of durability of the display medium.

Further, the patent literature 1 discloses the step of filling electrical-charged particles after forming of the adhesive agent. In the case of the electrophoresis ink (liquid), there also arises the problem of reduction of durability of the display medium due to adhesion failure caused by miscibility and mixing with the adhesive agent, like in the above case.

The present invention was carried out in view of the foregoing and aims to, even if an electrophoresis ink is used, suppress deterioration of adhesion between the upper surface of a structure and a counter electrode substrate and to improve structural durability and display durability of the electrophoresis display device.

### Solution to Problem

A first aspect of the present invention is a method for manufacturing an electrophoresis display device, the method comprising: a cell forming step of forming a plurality of cells on a first electrode substrate, each of the cells being composed of an insulating structure provided on the first electrode substrate in a standing manner; an adhesive layer transferring step of heating a film base material with a thermoplastic adhesive layer formed on a surface thereof, in such a state that the film base material is in contact with an upper surface of the structure and peeling the film base material in such a state that the adhesive layer is softened, thereby transferring the adhesive layer to the upper surface of the structure; an electrophoresis ink filling step of filling the cells with electrophoresis ink; and a substrate bonding step of bonding the upper surface of the structure and a second electrode substrate to each other while heating the upper surface and the second electrode substrate at a temperature lower than that in the adhesive layer transferring step.

A second aspect of the present invention is a method for manufacturing an electrophoresis display device, the method comprising the steps of : forming apluralityof cells ona first electrode substrate, each of the cells being composed of an insulating structure provided on the first electrode substrate in a standing manner; forming a first adhesive layer on upper surface of the structure; filling the cells with electrophoresis ink; forming a second adhesive layer on a second electrode layer with a pattern that is approximately same as a pattern of the upper surface of the structure; and bonding the first electrode substrate and the second electrode substrate to each other by placing the first electrode substrate and the second electrode substrate opposite to each other and adhering the first adhesive layer to the second adhesive layer.

A third aspect of the present invention is a method for manufacturing an electrophoresis display device, the method comprising the steps of : formingapluralityof cells ona first electrode substrate, each of the cells being composed of an insulating structure provided on the first electrode substrate in a standing manner; forming a first adhesive layer on an upper surface of the structure; bringing a second electrode substrate into contact with the upper surface of the structure with the first adhesive layer formed thereon; forming a second adhesive layer on a surface of the second electrode substrate by peeling the second electrode substrate from the upper surface of the structure and transferring a part of the first adhesive layer formed on the upper surface of the structure to the surface of the second electrode substrate; filling the cells with electrophoresis ink; and bonding the first electrode substrate and the second electrode substrate to each other by placing the first electrode substrate and the second electrode substrate opposite to each other and adhering the first adhesive layer to the second adhesive layer.

A fourth aspect of the present invention is a method for manufacturing an electrophoresis display device, the method comprising the steps of : forming apluralityof cells ona first electrode substrate, each of the cells being composed of an insulating structure provided on the first electrode substrate in a standing manner; forming a first adhesive layer on an upper surface of the structure; bringing a second electrode substrate into contact with the upper surface of the structure with the first adhesive layer formed thereon, and then, adhering a part of the first electrode substrate to a part of the second electrode substrate; forming a second adhesive layer on a surface of the second electrode substrate bypeelingnot-adheredparts of the second electrode substrate from the upper surface of the structure and transferring a part of the first adhesive layer formed on the upper surface of the structure to the surface of the second electrode substrate; filling the cells with electrophoresis ink in a state that the part of the first electrode substrate and the part of the second electrode substrate are adhered to each other; and bonding the first electrode substrate and the second electrode substrate to each other by adhering the first adhesive layer to the second adhesive layer.

A fifth aspect of the present invention is a method for manufacturing a base material provided with an adhesive layer, the method comprising the steps of: forming a structure on a surface of a first base material; forming a thermoplastic material layer made of a thermoplastic material on a surface of a second base material; bringing the thermoplastic material layer formed on the surface of the second base material into contact with an upper surface of the structure provided on the surface of the first base material in a standing manner; bonding the structure to the thermoplastic material layer by heating the thermoplastic material layer; and peeling off the second base material from the first base material in a state that the thermoplastic material layer is heated and thereby, transferring the thermoplastic material layer to the upper surface of the structure.

### Advantageous Effects of Invention

According to the present invention, it is possible to, even if an electrophoresis ink is used, suppress deterioration of adhesion between the upper surface of a structure and a counter electrode substrate and to improve structural durability and display durability of the electrophoresis display device.

### Brief Description of Drawings

Fig. 1 provides diagrams for explaining a method for manufacturing an electrophoresis display device according to a first embodiment;
Fig. 2 is a diagram for explaining an example of the method for manufacturing the electrophoresis display device according to the first embodiment;
Fig. 3 is a diagram for explaining an example of the method for manufacturing the electrophoresis display device according to the first embodiment;
Fig. 4 provides diagrams for explaining an example of a method for manufacturing an electrophoresis display device according to a second embodiment;
Fig. 5 provides diagrams for explaining pattern shapes of a first adhesive layer and a second adhesive layer according to the second embodiment;
Fig. 6 provides diagrams for explaining an example of the step of forming a first adhesive layer in the method for manufacturing the electrophoresis display device according to the second embodiment;
Fig. 7 provides diagrams for explaining an example of a method for manufacturing an electrophoresis display device according to a third embodiment;
Fig. 8 provides diagrams for explaining an example of the method for manufacturing the electrophoresis display device according to the third embodiment;
Fig. 9 provides diagrams for explaining pattern shapes of a first adhesive layer and a second adhesive layer according to the third embodiment;
Fig. 10 provides diagrams for explaining an example of a method for manufacturing an electrophoresis display device according to a fourth embodiment;
Fig. 11 provides diagrams for explaining an example of the method for manufacturing the electrophoresis display device according to the fourth embodiment;
Fig. 12 provides diagrams for explaining pattern shapes of a first adhesive layer and a second adhesive layer according to the fourth embodiment;
Fig. 13 provides diagrams for explaining a method for manufacturing a base material provided with an adhesive layer according to a fifth embodiment;
Fig. 14 provides diagrams for explaining an example of the method for manufacturing the base material provided with the adhesive layer according to the fifth embodiment;
Fig. 15 provides diagrams for illustrating relationship between the amount of transferred thermoplastic material layer and the adhesive layer according to the fifth embodiment and;
Fig. 16 provides diagrams for explaining an example of a method for manufacturing an electrophoresis display device using the base material provided with the adhesive layer according to the fifth embodiment.

### Description of Embodiments

### (FIRST EMBODIMENT)

In a first embodiment, description is made about a method for manufacturing an electrophoresis display device capable of forming an adhesive layer effectively and selectively only on an upper surface of a structure, suppressing miscibility and mixing of electrophoresis ink and an adhesive agent and also suppressing any damages to the electrophoresis ink when manufacturing the electrophoresis display device.

The method for manufacturing an electrophoresis display device according to the first embodiment has a cell forming step of forming a plurality of cells on a first electrode substrate, each of the cells being composed of an insulating structure provided on the first electrode substrate ina standingmanner; anadhesive layer transferring step of heating a film base material with a thermoplastic adhesive layer formed on a surface thereof, in such a state that the film base material is in contact with upper surface of the structure and peeling the f ilmbase material in such a state that the adhesive layer is softened, thereby transferring the thermoplastic adhesive layer to the upper surface of the structure; an electrophoresis ink filling step of filling the cells with electrophoresis ink; and a substrate bonding step of bonding the upper surface of the structure and a second electrode substrate to each other while heating the upper surface and the second electrode substrate at a temperature lower than that in the adhesive layer transferring step.

### <CELL FORMING STEP>

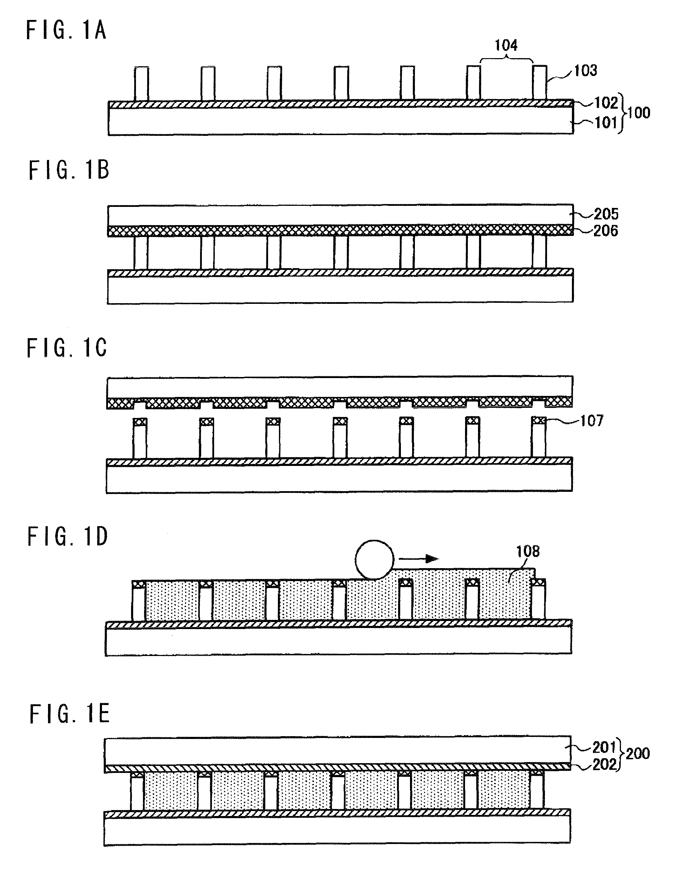

In the cell forming step, a plurality of cells (small containers) 104 is formed on a first electrode substrate 100, each of the cells being composed of an insulating structure 103 provided on the first electrode substrate in a standing manner (see Fig. 1A). The plural cells 104 are separated from each other by the structure 103 provided in a standing manner, and the shape of each cell may be a round, rectangular, square, hexagonal or any other shape, when the electrode substrate surface is seen in the vertical direction. And, the structure 103 may be called "rib" or "spacer".

The first electrode substrate 100 may be any substrate with electrodes provided thereon, and for example, it may be configured such that a first electrode layer 102 is formed on an insulating first base material 101, in which case, the insulating structure 103 may be formed on the first electrode layer 102.

The first base material 101 may be made of a transparent inorganic material such as glass, silica, sapphire, MgO, LiF, or CaF₂, fluorocarbon resin, polyester, polycarbonate, polyethylene, polyethylene terephthalate, polyethylene naphthalate, poly ether sulphone or other organic polymer film or ceramic, or the like.

The first electrode layer 102 may be formed of a transparent conductive material such as ITO, ZnO or SnO₂ or metal such as aluminum (Al), gold (Au), platinum (Pt), copper (Cu), silver (Ag), nickel (Ni), or chrome (Cr). In addition, it may be formed of a conductive polymer of PODET/PVS or PODET/PSS, or a transparent conductive material such as titanium oxide base, zinc oxide base, tin oxide base or the like. These materials may be used by deposition, ion plating, sputtering or another method. The shape of the first electrode layer 102 may be determined as appropriate in accordance with the shape of an opposite second electrode layer. Here, the first electrode layer 102 may be in contact with the first base material 101 or a TFT element may be provided on the first base material 101.

Here, in the electrophoresis display device, if the first electrode substrate 100 is a front-side electrode substrate, it is preferable that the first base material 101 and the first electrode layer 102 are made of translucency materials in order to allow characters and the like formed with electrophoresis ink to be visually identified through the first electrode substrate 100.

The structure 103 may be formed of a resin material such as PET film. For example, synthetic resin such as PET film having a predetermined thickness is subjected to laser beam machining thereby to form square, hexagonal or round-shaped cells 104. In addition, after an insulating layer is formed on the first electrode layer 102, the insulating layer is subjected to patterning by photo lithography thereby to form the plural cells 104. As another method, a thermoplastic resin is formed on the first electrode layer 102 and hot embossing or the like is performed to form the cells 104 by the structure 103 arranged in a double cross.

### <ADHESIVE LAYER TRANSFERRING STEP>

In the adhesive layer transferring step, a thermoplastic adhesive layer 206, which is formed on the surface of the film base material 205, is transferred from the film base material 205 to the upper surface of the structure 103 thereby to form a thermoplastic adhesive layer 107. In order to form the thermoplastic adhesive layer 107 on the surface of the structure 103 selectively, the film base material 205 with the thermoplastic adhesive layer 206 formed on the surface thereof is heated in such a manner that the film base material 205 is in contact with the upper surface of the structure 103, and the film base material 205 is peeled in such a state the thermoplastic adhesive agent is softened, thereby to transfer and form the thermoplastic adhesive layer 107 on the upper surface of the structure 103 (see Figs. 1B and 1C).

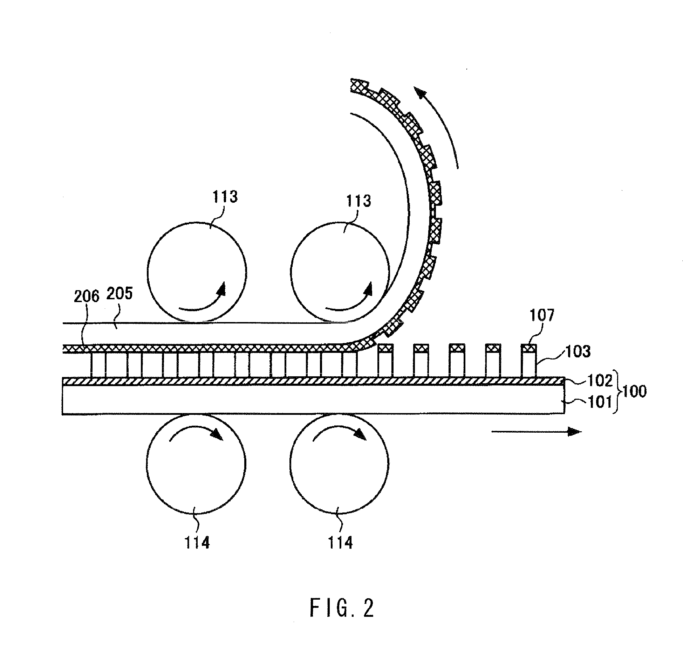

Here, in the adhesive layer transferring step, as illustrated in Fig. 2, the film base material 205 with the thermoplastic adhesive layer 206 formed on the surface thereof is brought into contact with the upper surface of the structure 103 and the film base material 205 is heated by applying a temperature which is equal to or higher than a softening point temperature of the thermoplastic adhesive agent while roller-shaped pressing members 113, 114 are used to press the film base material 205 and the first electrode substrate 100. Then, before the thermoplastic adhesive layer 206 become solidified, the film base material 205 is peeled off from the first electrode substrate 100 and thereby, the thermoplastic adhesive layer 206 formed on the surface of the film base material 205 can be transferred onto the upper surface of the structure 103. Thus, in the adhesive layer transferring step, a heat laminator or the like is used to transfer the thermoplastic adhesive layer. With this method, there is no need to position the structure and adhesive layer, thereby preventing any excess adhesive layer from being formed on a part other than the structure and increasing productivity markedly.

The thickness of the adhesive layer is determined by the thickness of the thermoplastic adhesive layer 206 formed on the film base material 205, the kind of the adhesive agent, heating temperature, load of the roller-shaped pressing members 113, 114 and the like. In addition, the thickness of the adhesive layer 107 can be controlled desirably by suppressing the size of a gap formed by the pressing members 113 and 114.

Here, in order to form the thermoplastic adhesive layer 107 on the structure 103 stably, it is preferable that heat is applied by the roller-shaped pressing members 113, 114 in the adhesive layer transferring step.

As to the kind of the thermoplastic adhesive agent used in the thermoplastic adhesive layer 206, it may be a hot-melt adhesive agent, paraffin wax, polyethylene resin or the like. Selection of the thermoplastic adhesive agent is performed in view of the softening point, however, thermal properties of other materials of the electrophoresis display device also need to be considered, including the boiling temperature of the electrophoresis ink solvent used, glass transition temperature of a film base material (Tg), the heat resistant temperature of the formed structure (Tg, melt temperature) and the like. Preferably, the thermoplastic adhesive agent is selected which is softened at lower temperatures than the above-mentioned other materials.

### <ELECTROPHORESIS INK FILLING STEP>

In the electrophoresis ink filling step, the electrophoresis ink 108 is charged into the cells 104 formed on the first electrode substrate 100 (see Fig. 1D). Here, before the cells 104 are filled with the electrophoresis ink 108, the thermoplastic adhesive layer 107 formed on the upper surface of the structure 103 is naturally or forcedly cooled so as to have such a hardness that the thermoplastic adhesive layer 107 is prevented from being flowing off the top surface of the structure 103 (hereinafter referred to as "being solidified" or "solidification"). For example, after the adhesive layer transferring step, the thermoplastic adhesive layer 107 formed on the upper surface of the structure 103 may be cooled by applying dry air at ambient temperatures.

Thus, by solidifying the thermoplastic adhesive layer 107 formed on the upper surface of the structure 103 before filling the cells with electrophoresis ink 108, even if the electrophoresis ink 108 is in touch with the thermoplastic adhesive layer 107, it is possible to prevent miscibility and solution of the electrophoresis ink 108 and thermoplastic adhesive layer 107. Here, as to timing of solidifying the thermoplastic adhesive layer 107, it is preferably performed after peeling the base material from the upper surface of the structure 103 in the above-described adhesive layer transferring step and before filling the cells with electrophoresis ink 108.

The electrophoresis ink 108 may be one containing at least one kind of electrophoresis particles, for example, it may be made from positively charged white particles, negatively charged black particles and dispersion medium for dispersing these particles. The white particles may be white pigments such as titanium oxide, white resin particles, resin particles colored white or the like. The black particles may be black pigments such as titanium black, carbon black or the like, resin particles colored black or the like. These particles may be any particles of various colors as far as contrast display is allowed, and for example, white and red, white and blue, yellow and black or any combination of colors may be used. Further, if colorants capable of contrast display are dissolved in the dispersion medium and used, only chargedparticles of one kind, that is, the white particles or the black particles, may be used.

### <SUBSTRATE BONDING STEP>

In the substrate bonding step, the first electrode substrate 100 and a second electrode substrate 200 are placed opposite to each other and the thermoplastic adhesive layer 107 formed on the upper surface of the structure 103 is brought into contact with the second electrode substrate 200 thereby to seal the electrophoresis ink 108 in the cells 104 (see Fig. 1E). Then, heating processing is performed to soften the thermoplastic adhesive layer 107 formed on the upper surface of the structure 103 until the thermoplastic adhesive layer 107 becomes adherable and thereby, the thermoplastic adhesive layer 107 is adhered to the second electrode substrate 200. That is, the thermoplastic adhesive layer 107, which was once solidified before the electrophoresis ink filling step, is softened again.

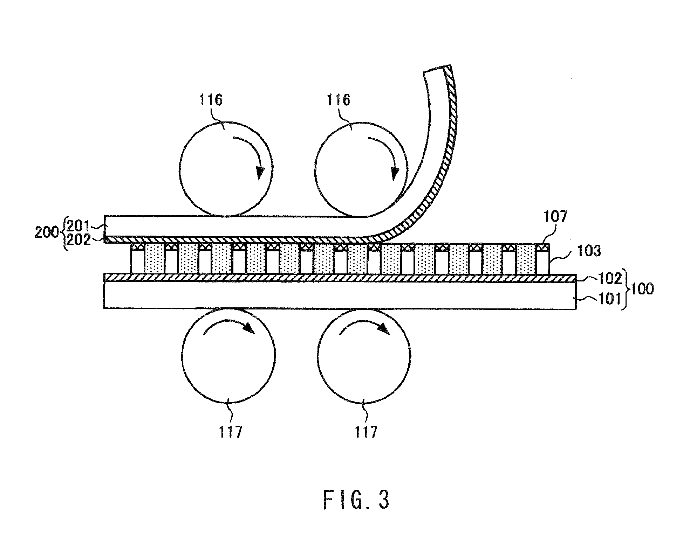

For example, as illustrated in Fig 3, after the thermoplastic adhesive layer 107 formed on the upper surface of the structure 103 is in contact with the second electrode substrate 200, the temperature which is equal or higher than the softening temperature of the thermoplastic adhesive layer 107 is applied while the first electrode substrate 100 and the second electrode substrate 200 are continuously pressed and bonded to each other by the roller-shaped pressing members 116, 117 (after thermocompression bonding), and then, the thermoplastic adhesive layer 107 is cooled and adhered thereby to seal the electrophoresis ink 108 in the cells.

The second electrode substrate 200 may be formed of a substrate provided with electrodes and for example, it may be configured to have a second electrode layer 202 provided on the second base material 201. Here, the second base material 201 may be formed of any of the materials described above in the explanation of the first base material 101. And, the second electrode layer 202 may be formed of any of the materials described above in the explanation of the second electrode layer 102. Here, in the electrophoresis display device, if the second electrode substrate 200 is a front-side electrode substrate, in order to allow characters and the like formed with the electrophoresis ink to be visually identified by the second electrode substrate 200, and therefore, the second base material 201 and the second electrode layer 202 are preferably formed of translucency materials.

Here, in the substrate bonding step, the temperature (T2) for softening the thermoplastic adhesive layer 107 is preferably set to be lower than the boiling temperature (T3) of the electrophoresis ink 108 (T3 > T2). This is because in the substrate bonding step, if a temperature equal to or higher than the boiling temperature of dispersion medium of the electrophoresis ink 108, the dispersion medium is volatilized and reduced thereby to deteriorate the performance of the electrophoresis ink. Accordingly, selection of the material of the thermoplastic adhesive agent is preferably performed in such a manner that the softening temperature becomes lower than the boiling temperature of the dispersion medium of the electrophoresis ink 108.

Besides, the temperature (T1) for softening the thermoplastic adhesive layer 206 in the above-mentioned adhesive layer transferring step until the thermoplastic adhesive layer 206 can be transferred is set to be higher than the temperature (T2) for softening the thermoplastic adhesive layer 107 in the substrate bonding step until the thermoplastic adhesive layer 107 can be bonded (T1 > T2). This is because it is necessary to apply high temperatures to the adhesive layer transferring step as the thermoplastic adhesive layer is melted sufficiently inside the layer and is removed sufficiently from the f ilmbase material 205, but in the substrate bonding step, it is necessary to maintain a fixed and stable distance between the substrates and therefore, it is necessary to maintain the shape of the thermoplastic adhesive layer 107.

Further, in the heating method in the substrate bonding step, in order to prevent volatilization of dispersion medium from the electrophoresis ink as much as possible, it is preferably that the second electrode substrate 200 is only heated. Specifically, bonding is performed while the roller-shaped pressing member 116 in Fig. 3 is only heated and the roller-shaped pressing member 117 is maintained at ambient temperatures (room temperatures). Furthermore, a heating device such as a heater may be arranged at the roller-shaped pressing member 116 side to heat the second electrode substrate 200 only.

In this way, as the cells 104 are closed by bringing the thermoplastic adhesive layer 107 formed on the upper surface of the structure 103 and the second electrode substrate 200 into contact with each other, it is possible to prevent the particles of the electrophoresis ink 108 from moving into another cell. Besides, by application of the manufacturing method according to the first embodiment, as the electrophoresis display device, it is possible to, even if the electrophoresis ink is used, provide adhesive layer on the upper surface of the structure easily and to suppress miscibility of the adhesive agent with the electrophoresis ink.

### (SECOND EMBODIMENT)

Next description is made about a second embodiment of the present invention.

The present inventors have studied carefully and found that if the cells are filled with the electrophoresis ink after the adhesive layer is formed on the upper surface of the structure, some kinds of the materials of the adhesive layer and the electrophoresis ink cause reduction in adhesion of the adhesive layer as the electrophoresis ink is in contact with the surface of the adhesive layer formed on the upper surface of the structure. This reduction in adhesion is considered to further causes problems of structural durability and display durability of the electrophoresis display device, or, for example, a problem that the opposed two electrode substrates are easily peeled from each other thereby to leak the electrophoresis ink and a problem that the gap between the structure and the electrode substrate is created to prevent sufficient suppression of flocculation or maldistribution of the electrophoresis particles.

In addition, when the adhesive layer is formed at the electrode substrate side opposite to the structure and adhered to the upper surface of the structure, the same problems as described above may occur by the electrophoresis ink adhered to the upper surface of the structure.

Then, in the second embodiment, description is made about the electrophoresis display device and the method for manufacturing the same capable of, even if the upper surface of the structure is adhered to the opposite electrode substrate via the adhesive layer, preventing reduction in adhesion and improving the structural durability and display durability of the electrophoresis display device.

The present inventors have found that it is possible to adhere the second electrode substrate and the upper surface of the structure to each other tightly without deterioration in display performance by forming adhesive layers on both of the upper surface of the structure formed on the first electrode substrate and the second electrode substrate and bonding them to each other.

The method for manufacturing a electrophoresis display device according to the second embodiment has: a step of forming a plurality of cells by an insulating structure provided in a standing manner on a first electrode substrate; a step of forming first adhesive layer on upper surface of the structure; a step of filling the cells with electrophoresis ink; a step of forming second adhesive layer, a pattern of the second adhesive layer being approximately same as a pattern of the upper surface of the structure; and a step of placing the first electrode substrate and the second electrode substrate opposite to each other and adhering the first adhesive layer and the second adhesive layer to each other to bond the first electrode substrate and the second electrode substrate to each other.

According to the second embodiment, even if the upper surface of the structure and the opposite electrode substrate are adhered to each other via the adhesive layers, it is possible to obtain an electrophoresis display device and a method for manufacturing the same capable of suppressing reduction in adhesion and improving structural durability and display durability of the electrophoresis display device. In the following, each step is described specifically with reference to the drawings.

### <CELL FORMING STEP>

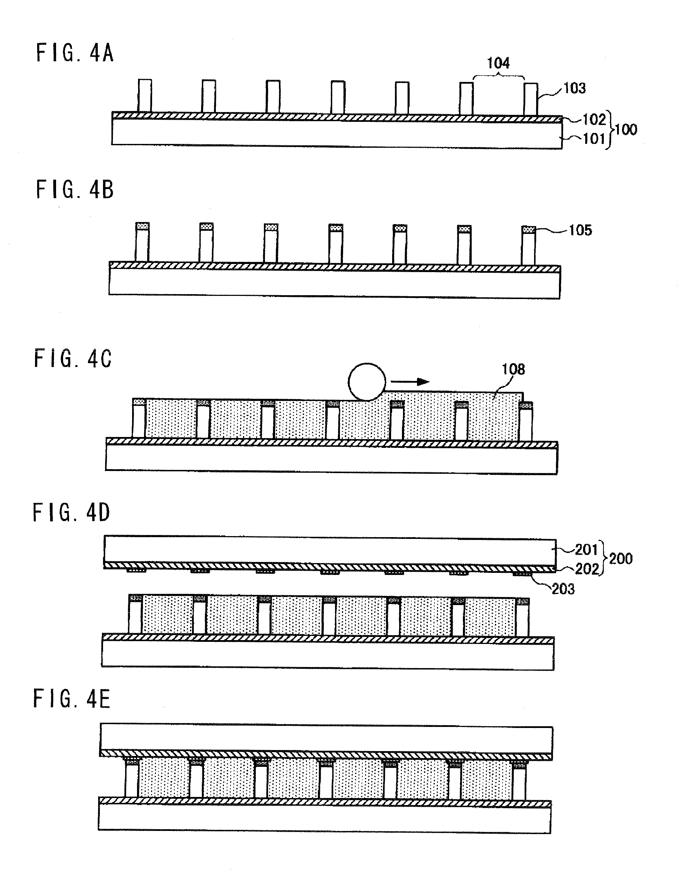

In the cell forming step, a plurality of small containers (cells 104) are formed by the insulating structure 103 provided on the first electrode substrate 100 in a standing manner (see Fig. 4A)

The first electrode substrate 100 may be any substrate having electrodes, or, for example, as illustrated in Fig. 4, it may be configured such that the electrode layer 102 is provided on the first base material 101 and the insulating structure 103 may be formed on the first electrode layer 102. The materials, manufacturing methods and the like applied to the first base material 101, the first electrode layer 102 and the structure 103 may be the same as those of the first embodiment disclosed above.

### <FIRST ADHESIVE LAYER FORMING STEP>

In the first adhesive layer forming step, a first adhesive layer 105 is formed on the upper surface of the structure 103 (see Fig. 48).

The first adhesive layer 105 may be made of any adhesive agent such as thermosetting adhesive agent, thermoplastic adhesive agent or photocurable adhesive agent, and it is preferably made of the thermoplastic adhesive agent. The thermoplastic adhesive agent is heated, melted or softened thereby to form the adhesive layer 105 on the upper surface of the structure 103, and then, the thermoplastic adhesive agent is cooled so that the adhesive agent is solidified only on the upper surface of the structure 103. With this step, it is possible to prevent the adhesive agent from flowing into the cells. Further, if the adhesive layer is heated again after the electrophoresis ink is charged, the adhesive layer is melted or softened thereby to be able to adhere the substrates to each other in the bonding step.

Further, when the thermosetting adhesive agent or the photocurable adhesive agent is used, it is preferable to form the first adhesive layer 105 so as to prevent the adhesive agent from flowing into the cells from the upper surface of the structure 103. For example, the adhesive agent is cured on the upper surface of the structure 103 by minimum heating or exposure to ultraviolet radiation so that the adhesive agent can be solidified and the adhesive agent is heated or exposed to ultraviolet radiation again in the bonding step and thereby the adhesive agent can be adhered or cured completely.

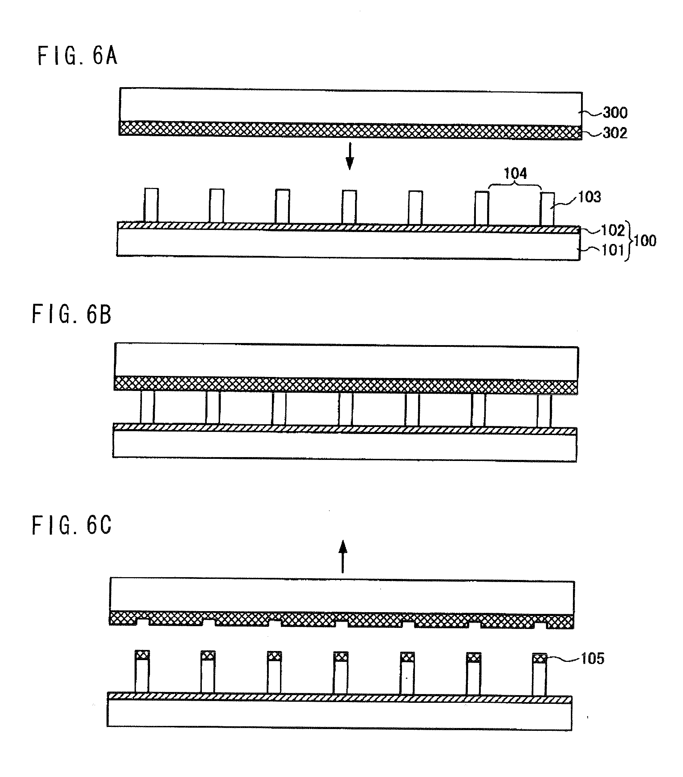

The first adhesive layer 105 can be formed with use of any of various methods such as gravure printing, screen printing, inkjet, transferring or the like, in accordance with the properties of the used adhesive agent. Particularly, the transferring method is preferable. If the transferring method is used, a base material 300 on the surface of which the adhesive agent 302 is formed is brought into contact with the upper surface of the structure 103 and then peeled and thereby, the a part of the adhesive agent on the base material surface can be transferred to the upper surface of the structure 103 (see Figs. 6A to 6C). This is because as the transferring method is used, the first adhesive layer 105 can be selectively and easily formed on the upper surface of the structure 103. Here, if the first electrode substrate 100 is a substrate having flexibility, transferring is performed with a roll process thereby to improve the efficiency of the manufacturing process.

### <ELECTROPHORESIS INK FILLING STEP>

In the electrophoresis ink filling step, the cells 104 formed on the first electrode substrate 100 are filled with electrophoresis ink 108 (see Fig. 4C). Filling may be performed by any of various methods of filling the cells with ink, including, for example, coating by a die coater, screen printing, filling by inkjet or dispenser. Here, the materials applied to the electrophoresis ink may be the same as those in the first embodiment described above.

### <SECOND ADHESIVE LAYER FORMING STEP>

In the second adhesive layer forming step, a second adhesive layer 203 is formed on the surface of the second electrode substrate 200, and the pattern of the second adhesive layer 203 is approximately the same as that of the pattern of the upper surface of the structure (see Fig. 4D).

The second electrode substrate 200 may be any substrate having electrodes, or, for example, it may be configured such that the second electrode layer 202 is provided on the second base material 201. Here, the materials applied to the second base material 201 and the second electrode layer 202 may be the same as those in the first embodiment described above.

The second adhesive layer 203 may be made of any adhesive agent such as thermosetting adhesive agent, thermoplastic adhesive agent or photocurable adhesive agent. And, the adhesive agent may be formed by gravure printing, screen printing, inkjet, transferring or the like.

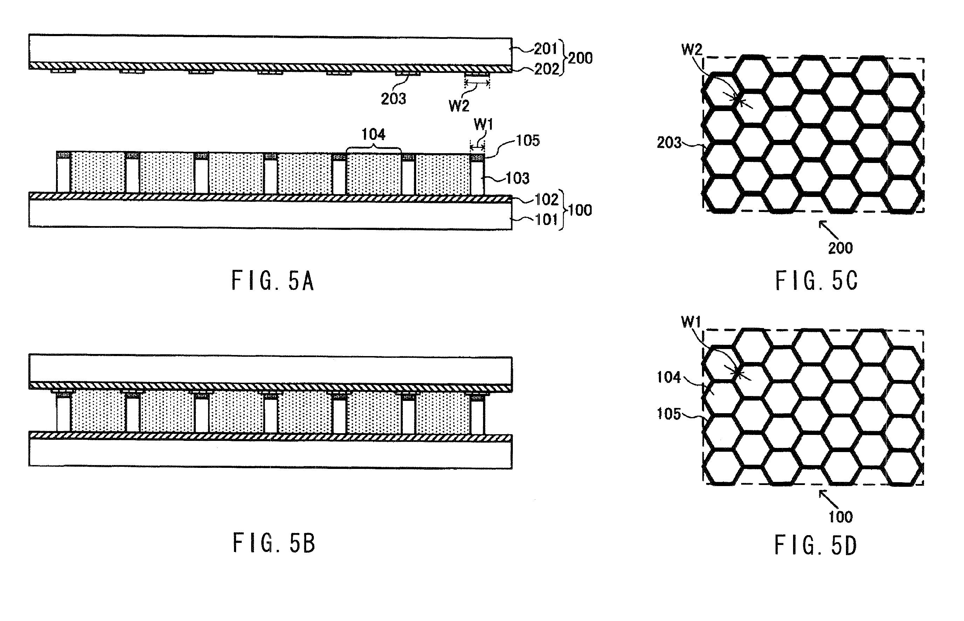

Here, the second adhesive layer 203 is formed with a pattern which is approximately the same as the pattern of the upper surface of the structure provided on the first electrode substrate 100 (see Figs. 5A to 5D).

As to the point that the pattern is approximately the same as the patter of the upper surface of the structure, this means that, as illustrated in Figs. 5C and 5D, the second adhesive layer 203 is formed corresponding to the pattern of the upper surface of the structure. Preferably, it means that the center of W1 coincides with the center of W2 in Fig 5A. Further, as to the relationship between W1 and W2, W1 may be smaller than W2 (W1 < W2) as far as the display performance is not affected or W1 may be greater than W2 (W1 > W2) as far as adhesion can be assured. It is more preferable that W1 is equal to W2 (W1 = W2) in view of adhesion and display performance.

The second adhesive layer 203 is preferably formed of the same material as that of the first adhesive layer 105 or a material having the effect of improving the adhesion for the first adhesive layer 105. With this, it is possible to improve adhesion of the first adhesive layer 105 and the second adhesive layer 203.

### <BONDING STEP>

In the bonding step, the first electrode substrate 100 and the second electrode substrate 200 are placed opposite to each other and the second electrode substrate 203 is adhered to the upper surface of the structure 103 via the first adhesive layer 105 and the second adhesive layer 203, thereby sealing the electrophoresis ink 108 in the cells 104 (see Fig. 4E)

When adhering the first adhesive layer 105 provided on the upper surface of the structure 103 and the second adhesive layer 203 provided on the second electrode substrate 200 to each other, as the adhesive layers are formed on both adhesion surfaces, adhesion can be further improved as compared with the case where the adhesive layer is formed on either of the upper surface of the structure 103 and the second electrode substrate 200.

The adhesive agent used in the adhesive layer 203 and the first adhesive layer 105 is preferably made of a material which is excellent in adhesion to the second electrode substrate 200 and the structure 103. However, if the electrophoresis ink or its components exist directly in the surface of the structure 103 or the second electrode substrate 200 to be adhered, adhesion is reduced drastically. This reduction in adhesion is caused by reduction in effective contact area due to existence of the electrophoresis particles or adhesion of an additive agent such as interfacial active agent in the electrophoresis ink 108 to the surfaces of the structure 103 or the second electrode substrate 200.

According to the manufacturing method of the second embodiment, as the adhesive layers are formed in advance on the second electrode substrate 200 and the surfaces of the structure 103 to be adhered, it is possible to prevent the interfacial active agent in the electrophoresis ink 108 or the electrophoresis particles from intervening and to prevent reduction in adhesion. Here, there is a possibility that in bonding, the electrophoresis particles or interfacial active agent in the electrophoresis ink 108 may intervene between the first adhesive layer 105 and the second adhesive layer 203. However, the first adhesive layer 105 and the second adhesive layer 203 are softer than the structure 103 and the second electrode substrate 200 and in the bonding step, each of the adhesive layers can be modified, mixed or to be miscible, and therefore, sufficient wettability, sufficient contact areas and anchor effect can be expected.

When the thermoplastic adhesive agent is used as the adhesive agent in this embodiment, as the thermoplastic adhesive agent is softened at a desired temperature (for example, 100°C) and exhibits excellent wettability with the base material at higher temperatures, contact and adhesion are improved. And, even at ambient temperatures, if the thermoplastic adhesive agent is one having stickiness (tackiness), it may exhibit excellent contact and adhesion at temperatures close to ambient temperatures. The same goes for the following embodiments.

Further, if the ultraviolet cure adhesive agent is used, as the ultraviolet cure adhesive agent is cured by absorbing desired accumulated light amount (for example, 3000 mJ/cm²), for example, immediately after the first adhesive layer 105 and the second adhesive layer 203 are formed, the adhesive agents are semi-cured by exposure to a part of the desired accumulated light amount and then, the electrophoresis ink 108 is charged into the cells 104 and the bonding step is performed. With this process, it is possible to increase adhesion in each of between the first adhesive layer 105 and the second electrode substrate 200 and between the second adhesive layer 203 and the structure 103, and to obtain adhesion by a relatively small amount of accumulated light in the bonding step. This goes for the following embodiments.

### (THIRD EMBODIMENT)

Next description is made about a third embodiment of the present invention.

The present inventors have studied and found that even if both the substrates are bonded to each other after filling the cells with the electrophoresis ink, the adhesive layers are formed on both of the second electrode substrate and the upper surface of the structure formed on the first electrode substrate and the second electrode substrate and the upper surface of the structure are bonded to each other, thereby making it possible to strengthen adhesion between the second electrode substrate and the upper surface of the structure without losing the display performance (the above-described second embodiment).

In this case, as described in the above-mentioned second embodiment, it is preferable that the adhesive layer formed on the second electrode substrate has a shape which is similar to the shape of the structure. This is because if a layer of the adhesive agent or the like is formed on the entire part of the second electrode substrate, desired voltage is not applied to the electrophoresis ink in driving thereby to decrease display contrast, or more driving voltage is required to achieve desired display contrast.

In the meantime, when the adhesive layer is formed on the surface of the electrode substrate opposite to the structure, for example, by screen printing, with a pattern which is the same as that of the upper surface of the structure, the pattern of the structure (if it is complicated) may sometimes cause newproblems such as the complicated steps, the positioning accuracy of both sides, adjustment in variations of the size and shape of each component and the like.

Then, in the third embodiment, description is made about the method for manufacturing a electrophoresis display device in a simple manner which is capable of, when the adhesive layers of similar shape are formed on the respective electrode substrates opposite to each other thereby to bond the electrode substrates to each other, reducing variations of the patterns of the adhesive layers formed on both the electrode substrates, reducing step complexity, and suppressing reduction in adhesion of both the electrode substrates and display contrast.

The present inventors have found that the adhesive layers of the approximately same pattern are formed both of on the upper surface of the structure formed on the first electrode substrate and on the second electrode substrate by transferring, and after the electrophoresis ink is charged, the adhesive layers formed on both the electrode substrates are used to bond the electrode substrates to each other, thereby strengthening the adhesion between the upper surface of the structure and the second electrode substrate without losing the display performance through simple steps.

A method for manufacturing a electrophoresis display device according to the third embodiment has: a step of forming a plurality of cells formed by insulating structure provided on a first electrode substrate in a standing manner; a step of forming first adhesive layer on upper surface of the structure, a step of bringing a second electrode substrate into contact with the upper surface of the structure on which the first adhesive layer is formed; a step of peeling the secondelectrode substrate from the upper surface of the structure to transfer a part of the adhesive layer formed on the upper surface of the structure to a surface of the second electrode substrate thereby to form second adhesive layer on the surface of the second electrode substrate; a step of filling the cells with electrophoresis ink; and a step of bonding the first electrode substrate and the second electrode substrate to each other by placing the first electrode substrate and the second electrode substrate opposite to each other and adhering the first adhesive layer and the second adhesive layer to each other.

According to the third embodiment, even if the adhesive layers of similar pattern are formed on both of the opposed electrode substrates thereby to bond the electrode substrates to each other, it is possible to provide a method for manufacturing a electrophoresis display device simply which is capable of reducing variations of the patterns of the adhesive layers formed on both the electrode substrates and reducing step complexity. Besides, as this method makes it possible to prevent reduction in adhesion between the opposite substrates and to make partitions between each cell securely, it is possible to provide an electrophoresis display device easily which is capable to prevent reduction of display contrast. In the following, each step is described specifically with reference to the drawings.

### <CELL FORMING STEP>

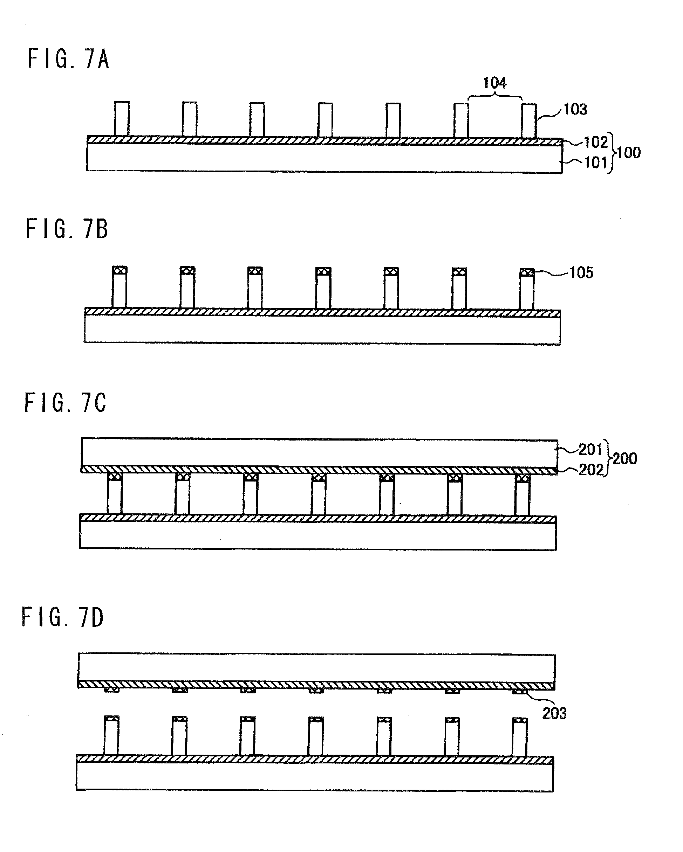

In the cell forming step, a plurality of small containers (cells 104) are formed by t insulating structure 103 provided on the first electrode substrate 100 in a standing manner (see Fig. 7A).

The first electrode substrate 100 may be any substrate having electrodes, or for example, as illustrated in Fig. 7, it maybe configured such that the first electrode layer 102 is provided on the first base material 101 and the insulating structure 103 is formed on the first electrode layer 102. Here, the materials, manufacturing method and the like applied to the first base material 101, the first electrode layer 102 and the structure 103 may be the same as those of the first embodiment mentioned above.

### <FIRST ADHESIVE LAYER FORMING STEP>

In the first adhesive layer forming step, the first adhesive layer 105 is formed on the upper surface of the structure 103 (see Fig. 7B). Here, the materials, manufacturing methods and the like applied to the first adhesive layer 105 may be the same as those of the second embodiment described above.

### <CONTACT STEP>

Next, the second electrode substrate 200 is brought into contact with the upper surface of the structure 103 with the first adhesive layer 105 formed on the surface thereof (see Fig. 7C).

In bringing the second electrode substrate 200 into contact with the first adhesive layer 105, it is preferable that the first adhesive layer 105 is softened. For example, when the thermoplastic adhesive agent is used in the first adhesive layer 105, the first adhesive layer 105 is preferably brought into contact with the second electrode substrate 200 after the first adhesive layer 105 is formed on the upper surface of the structure 103 and before it is cooled and solidified. Besides, if the first adhesive layer 105 is already solidified, the first adhesive layer 105 is preferably heated to be melted or softened before it is bought into contact with the second electrode substrate 200. Further, if the thermosetting adhesive agent or photocurable adhesive agent is used in the first adhesive layer 105, the first adhesive layer 105 is brought into contact with the second electrode substrate 200 after the first adhesive layer 105 is formed on the upper surface of the structure 103 and before it is heated or exposed to ultraviolet radiation thereby to be cured.

### <SECOND ADHESIVE LAYER FORMING STEP>

Next, the first adhesive layer 105 formed on the upper surface of the structure 103 is partially transferred to the surface of the second electrode substrate 200 by peeling the second electrode substrate 200 from the structure 103. Consequently, the second adhesive layer 203 can be formed on the surface of the second electrode substrate 200 with a pattern which is approximately the same as the pattern of the upper surface of the structure 103 (see Fig. 7D).

The second electrode substrate 200 may be any substrate having electrodes, or for example, it may be configured such that the second electrode layer 202 is formed on the second base material 201. However, the materials applied to the second base material 201 and second electrode layer 202 may be the same as those of the first embodiment described above.

Besides, the first adhesive layer 105 remaining on the upper surface of the structure 103 can be solidified by peeling the second electrode substrate 200 from the structure 103 and then cooling the adhesive layer. With this process, it is possible to prevent the adhesive agent from flowing into the cells 104 and prevent the first adhesive layer 105 from being melted into the electrophoresis ink in the following electrophoresis ink filling step.

Further, when the thermosetting adhesive agent or photocurable adhesive agent is used in the first adhesive layer 105, first the second electrode substrate 200 is peeled from the structure 103, and the first adhesive layer 105 remaining on the upper surface of the structure 103 is semi-cured by minimum heating or exposure to ultraviolet radiation so that the adhesive agent can be solidified. Then, in the bonding step, the adhesive layer is heated or exposed to ultraviolet radiation again and thereby the adhesive agents can be adhered or cured completely.

In this way, as the first adhesive layer 105 in the following electrophoresis ink filling step is cured more than the first adhesive layer 105 in the contact step, it is possible to form the second adhesive layer 203 on the second electrode substrate 200 in an excellent manner, to prevent the adhesive agent from flowing into the cells 104 in the electrophoresis ink filling step and also to prevent the first adhesive layer 105 from being melted into the electrophoresis ink. Here, the cured state is a state where viscosity is increased or flowability is reduced, or more concretely, the state means that the viscosity of the first adhesive layer 105 in their entirety in the electrophoresis ink filling step is increased (flowability is reduced) as compared with that of the first adhesive layer 105 in the contact step. Besides, the cured state includes a semi-cured state and the cured state of the first adhesive layer 105 in the electrophoresis ink filling step is a semi-cured state. The first adhesive layer 105 is further cured in the bonding step.

As described above, the structure 103 on the upper surface of which the first adhesive layer 105 is formed is brought into contact with the second electrode substrate 200 and then, the second electrode substrate 200 is peeled so that the second adhesive layer 203 is simply formed on the surface of the second electrode substrate 200 with a pattern which is approximately the same as the pattern of the upper surface of the structure 103 and with use of the same material.

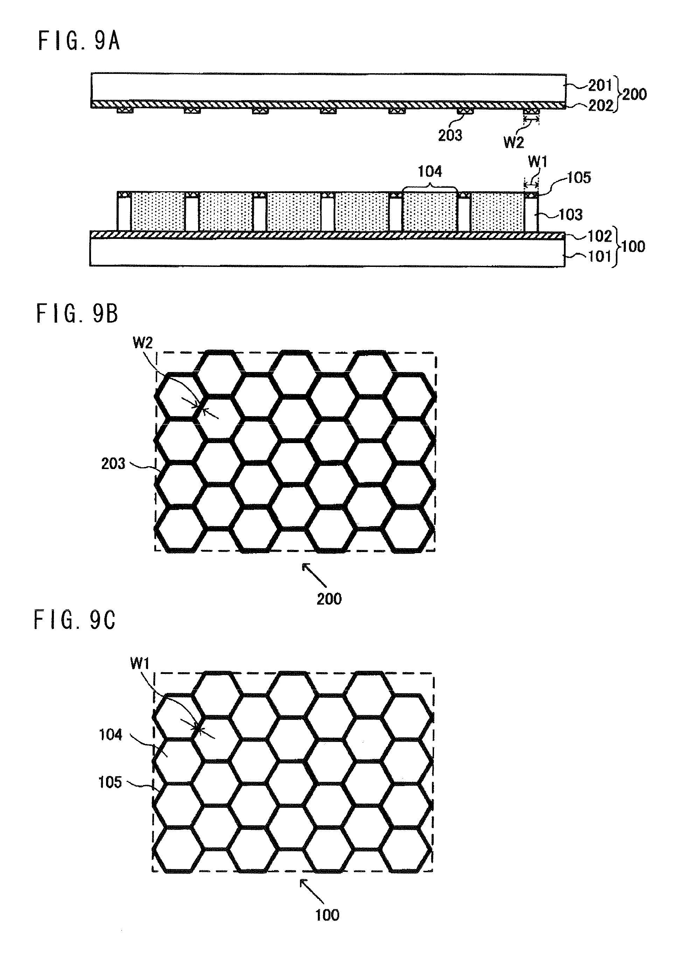

Here, as to the point that the pattern is approximately the same as the patter of the upper surface of the structure 103, this means that, as illustrated in Figs. 9A to 9C, the second adhesive layer 203 is formed on the second electrode substrate 200 corresponding to the pattern of the upper surface of the structure 103. Preferably, it means that in Fig. 9A, the center of the width W1 of the first adhesive layer 105 coincides with the center of the width W2 of the second adhesive layer 203. Further, as to the relationship between W1 and W2, it is preferable that W1 is equal to W2 (W1 = W2), however, either of the width of the structure 103 and the width of the second adhesive layer 203 may be larger (W1 < W2 or W1 > W2) where the first electrode substrate 100 and the second electrode substrate 200 are pressed forcefully in the contact step. In Fig. 9, Fig. 9A is a cross sectional view, Fig. 9B is a plan view of the second electrode substrate 200 and Fig. 9C is a plan view of the first electrode substrate 100.

### <ELECTROPHORESIS INK FILLING STEP>

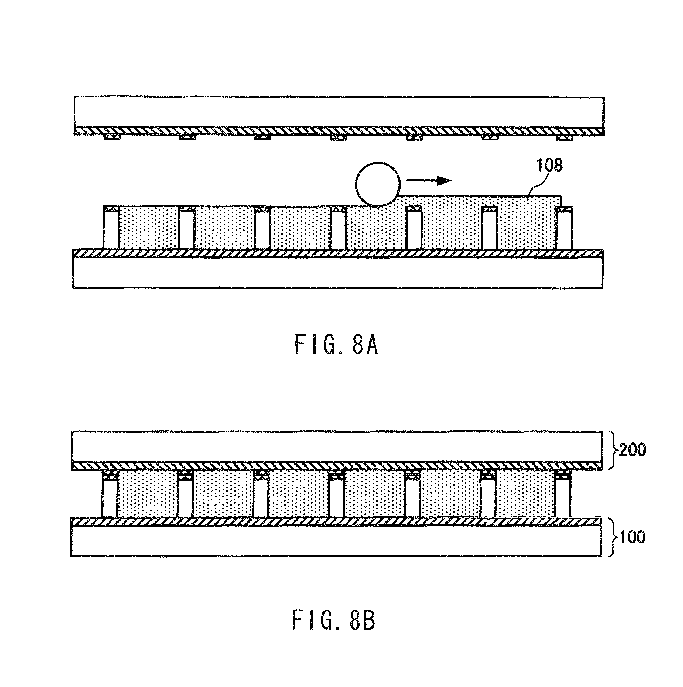

In the electrophoresis ink filling step, the cells 104 formed on the first electrode substrate 100 are filled with electrophoresis ink 108 (see Fig. 8A). However, the method, the material and the like applied to the electrophoresis ink may be the same as those of the above-mentioned embodiments.

### <BONDING STEP>

In the bonding step, the first electrode substrate 100 and the second electrode substrate 200 are placed opposite to each other and the upper surface of the structure 103 and the second electrode substrate 200 are adhered to each other via the second adhesive layer 203 and the first adhesive layer 105 thereby to seal the electrophoresis ink 108 in the cells 104 (see fig. 8B). Here, as to opposite arrangement of the first electrode substrate 100 and the second electrode substrate 200, they are positioned in such a manner that the pattern of the upper surface of the structure 103 and the pattern of the second adhesive layer 203 formed on the second electrode substrate 200 are superimposed one on another.

In this way, when adhering the first adhesive layer 105 formed on the upper surface of the structure 103 and the second adhesive layer 203 formed on the second electrode substrate 200 to each other, as the adhesive layers are formed on both contact surfaces, it is possible to increase adhesion as compared with the case where the adhesive layer is formed either on the second electrode substrate 200 or on the upper surface of the structure 103.

According to the third embodiment, as the adhesive layers are formed in advance on both of the second electrode substrate 200 and the structure 103 to be adhered, it is possible to prevent the electrophoresis particles and interfacial active agent from intervening and to suppress reduction in adhesion. Here, in bonding, there may be a possibility that the electrophoresis particles and interfacial active agent intervene between the first adhesive layer 105 and the second adhesive layer 203. However, as the first adhesive layer 105 and the second adhesive layer 203 are softer than the second electrode substrate 200 and the structure 103 and each of the first adhesive layer 105 and the second adhesive layer 203 is modified, mixed or to be miscible in the bonding step, sufficient wettability, enough contact areas and anchor effects can be expected.

Further, the second adhesive layer 203 formed on the second electrode substrate 200 is an adhesive layer formed by partially transferring the first adhesive layer 105 formed on the upper surface of the structure 103. That is, the first adhesive layer 105 and the second adhesive layer 203 are formed of the same material and approximately the same pattern. With this structure, it is possible to increase adhesion of the first adhesive layer 105 and the second adhesive layer 203. Further, as it is possible to prevent any adhesive layer from being formed on areas of the surfaces of the first electrode substrate 100 and the second electrode substrate 200, the areas not overlapping the structure 103, it is possible to prevent reduction in display contrast due to no desired voltage applied to the electrophoresis ink in driving, as compared with the case where the second adhesive layer 203 is formed on the entire part of the second electrode substrate 200, and it is also possible to set a lower drive voltage to achieve desired display contrast.

### (FOURTH EMBODIMENT)

Next description is made about a fourth embodiment of the present invention.

The present inventors have studied and found that even if in bonding both the substrates, the opposite substrate surfaces are first wet by electrophoresis ink after the cells of the structure are filled with the electrophoresis ink, the adhesive layers are formed on both of the upper surface of the structure formed on the first electrode substrate and the second electrode substrate thereby to strengthen adhesion of the upper surface of the structure and the second electrode substrate to each other without losing the display performance (the above-described second embodiment). Further, the adhesive layer formed on the upper surface of the structure is brought into contact with the upper surface of the second electrode substrate and a part of the adhesive layer formed on the upper surface of the structure is transferred to the surface of the second electrode substrate, thereby reducing variation of pattern shapes of the adhesive layers formed on both the electrode substrates and reducing complexity of the steps (the above-described third embodiment).

On the other hand, in forming adhesive layer on the surface of the electrode substrate opposite to the structure with a pattern which is the same as that of the upper surface of the structure (pattern shape), if the shape of the structure is complicated or fine, in order to accurately position both the electrode substrates with the adhesive layers formed of the same pattern, respectively, there is considered to be a need to perform complicated positioning control with use of a positioning device such as an image detecting device. If the positioning device such as the image detecting device is used, there is a problem of reduction in efficiency of the manufacturing process because positioning takes much time in bonding of the opposed electrode substrates.

Then, in the fourth embodiment, description is made about the method for the electrophoresis display device capable of, when the adhesive layers of similar shape are formed on the opposed electrode substrates, respectively, and the adhesive layers formed on both the electrode substrates are adhered and bonded to each other with high accuracy, eliminating the need to perform complicated positioning with use of the positioning device such as image detecting device and facilitating the bonding step.

The present inventors have found the in the step of forming the adhesive layers on both the substrates and the bonding the substrates to each other, a part of the adhesive layer formed on the upper surface of the structure on the first electrode substrate is transferred to the second electrode substrate by bringing the second electrode substrate into contact with the upper surface of the structure, and thereby it is possible to easily form the adhesive layer on the second electrode substrate surface with a pattern which is the same as that of the structure. Further, while the first electrode substrate and the second electrode substrate are partially adhered to each other, transferring of the adhesive layer, filling of the electrophoresis ink and bonding of the first electrode substrate and the second electrode substrate are performed thereby to in the bonding step after the electrophoresis ink filling step, perform positioning of the adhesive layers formed on the second electrode substrate and the upper surface of the structure easily and highly-accurately.

A method for manufacturing a electrophoresis display device according to the fourth embodiment has: a step of forming a plurality of cells by insulating structure provided on a first electrode substrate in a standing manner; a step of forming first adhesive layer on upper surface of the structure; a step of bringing a second electrode substrate into contact with the upper surface of the structure on which the first adhesive layer is formed and then, adhering a part of the first electrode substrate to a part of the second electrode substrate; a step of a peeling a not-adhered part of the second electrode substrate from the upper surface of the structure, transferring the part of the first adhesive layer to a surface of the second electrode substrate thereby to form second adhesive layer on the second electrode substrate; a step of filling the cells with electrophoresis ink while a part of the first electrode substrate and a part of the second electrode substrate are adhered to each other; and a step of bonding the first electrode substrate to the second electrode substrate by adhering the first adhesive layer to the second adhesive layer.

According to the fourth embodiment, even when the adhesive layers of similar shape are formed on the opposed electrode substrates and the adhesive layers formed on both of the substrates are adhered to each other to bond the electrode substrates, it is possible to perform bonding processing with high accuracy without need to perform complicated positioning using a positioning device such as an image detecting device, and it is also possible to simplify the bonding step. In the following, each step is described specifically with reference to the drawings.

### <CELL FORMING STEP>

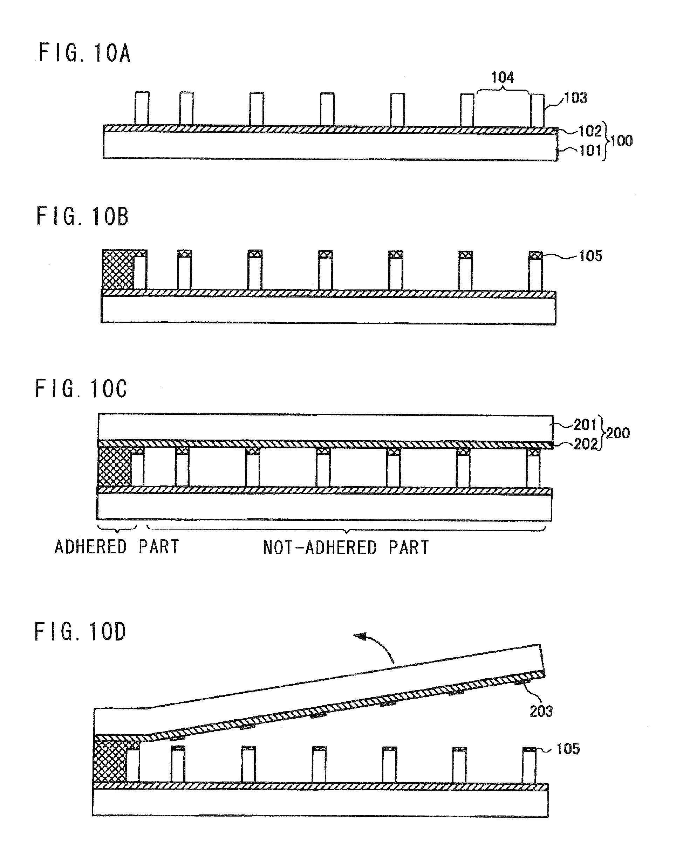

In the cell forming step, a plurality of small containers (cells 104) are formed by insulating structure 103 provided on the first electrode substrate 100 in a standing manner (see Fig. 10A).

The first electrode substrate 100 may be any substrate having electrodes, or for example, as illustrated in Fig. 10, it may be configured such that the first electrode layer 102 is provided on the first base material 101, and the insulating structure 103 may be formed on the first electrode layer 102. Here, the materials, manufacturing methods and the like applied to the first base material 101, the first electrode layer 102 and the structure 103 may be the same as those of the first embodiment described above.

### <FIRST ADHESIVE LAYER FORMING STEP>

In the first adhesive layer forming step, the first adhesive layer 105 is formed on the upper surface of the structure 103 (see Fig. 10B). Here, the material, the manufacturing method and the like applied to the first adhesive layer 105 may be the same as those of the second embodiment described above.

### <FIRST BONDING STEP>

Next, the second electrode substrate 200 is brought into contact with the upper surface of the structure 103 on the surface of which the first adhesive layer 105 is formed. Then, the first electrode substrate 100 and the second electrode substrate 200 are partially and selectively fixed to each other in some areas (see Fig. 10C).

In bringing the second electrode substrate 200 into contact with the first adhesive layer 105, it is preferable that the first adhesive layer 105 is softened. For example, if the thermoplastic adhesive agent is used as the first adhesive layer 105, the first adhesive layer 105 may be brought into contact with the second electrode substrate 200 after the first adhesive layer 105 is formed on the structure 103 and before the first adhesive layer 105 is cooled and solidified. Further, if the first adhesive layer 105 is solidified, the first adhesive layer 105 may be melted or softened before it is brought into contact with the second electrode substrate 200. Further, when the thermosetting adhesive agent or photocurable adhesive agent is used as the first adhesive layer 105, the first adhesive layer 105 may be brought into contact with the second electrode substrate 200 after the first adhesive layer 105 is formed on the upper surface of the structure 103 and before the first adhesive layer 105 is heated or exposed to ultraviolet radiation to be cured.

Adhesion of the first electrode substrate 100 and the second electrode substrate 200 may be performed by any of various methods. For example, an adhered part forming step of selectively forming photocurable adhesive agent in an area which is an adhered part is provided before the first bonding step and in the first bonding step, the photocurable adhesive agent formed in the adhered part forming step is exposed to ultraviolet radiation and thereby the first electrode substrate 100 and the second electrode substrate 200 are adhered to each other selectively. When the thermoplastic adhesive agent is used as the first adhesive layer 105, as described above, the thermoplastic adhesive agent is formed on the upper surface of the structure 103, the photocurable adhesive agent is selectively formed at an area as adhered part of at least one of the first electrode substrate 100 and the second electrode substrate 200, and then, the second electrode substrate 200 is brought into contact with the upper surface of the structure 103. Next, the photocurable adhesive agent formed at the area as adhered part is exposed to ultraviolet radiation and cured thereby to adhere the first electrode substrate 100 to the second electrode substrate 200 partially at an area.

In this way, the thermoplastic adhesive agent is used as the first adhesive layer 105 formed on the structure 103 and the photocurable adhesive agent is used as an adhesive agent to be formed on the adhered part, it is only the photocurable adhesive agent that is selectively cured by ultraviolet radiation, without curing the thermoplastic adhesive agent. Accordingly, it is possible to suppress the position of the adhered part easily.

Besides, in the event that the adhesive agent formed in the adhered part and the first adhesive layer 105 formed on the structure 103 are formed of different materials, this combination of different adhesive agents is by no means limiting. The combination may be such that the thermoplastic adhesive agent is used in the first adhesive layer 105 and the thermosetting adhesive agent is used in the area as the adhered part. In this case, heat is applied to the thermosetting adhesive agent formed on the area as the adhered part thereby to be cured selectively.

In addition, the combination may be such that the photocurable adhesive agent is used in the first adhesive layer 105 and the thermoplastic adhesive agent or thermosetting adhesive agent is used in the area as the adhered part. In this case, the thermoplastic adhesive agent (or thermosetting adhesive agent) formed on the area as the adhered part is cooled (or heated) thereby to be cured selectively. Besides, the combination may be such that the thermosetting adhesive agent is used in the first adhesive layer 105 and the thermoplastic adhesive agent or photocurable adhesive agent is used in the area as the adhered part. In this case, the thermoplastic adhesive agent (or photocurable adhesive agent) formed at the area as the adhered part is cooled (or exposed to ultraviolet radiation) thereby to be cured selectively.

Here, the method for adhering the first electrode substrate 100 and the second electrode substrate 200 is not limited to the above-described method. For example, the method may be such that after the thermoplastic adhesive agent is formed on the upper surface of the structure 103, the second electrode substrate 200 is brought into contact with the upper surface of the structure 103 and then, the area as the adhered part is cooled selectively. In this case, there is a merit that one adhesion is only need to be used. Besides, the adhered part may be formed by, where the photocurable adhesive agent is formed on the upper surface of the structure 103, making the area as the adhered part selectively exposed to ultraviolet radiation or by, when the thermosetting adhesive agent is formed on the upper surface of the structure 103, heating the area as the adhered part selectively.

Besides, in order to allow adhesion of the first electrode substrate 100 and the second electrode substrate 200, a hotchkiss (stapler), clip, screw, double-faced tape or the like may be used. In this case, the first electrode substrate 100 may be partially adhered to the second electrode substrate 200 with use of any of the above-mentioned materials after the second electrode substrate 200 is brought into contact with the upper surface of the structure 103 on which the first adhesive layer 105 is formed.

The formation part of the adheredpart is not limitingparticularly, however, it is preferable the adhered part is formed at an end of the first electrode substrate 100 (second electrode substrate 200) in consideration of the electrophoresis ink filling step performed later. For example, if the first electrode substrate 100 and the second electrode substrate 200 are rectangular shaped, the adhered part is formed along an end of each of the substrates.

Further, the adhered part may be removed after a subsequent step (for example, the second bonding step). With this removal, even if the adhered part is provided of a different material or with use of hotchkiss (stapler), clip, screw, double-faced tape or the like, the adhered part may be removed from a final product.

The second electrode substrate 200 may be any substrate having electrodes and for example, it may be configured such that the second electrode layer 202 is provided on the second base material 201. Here, the material and the like applied to the second electrode substrate 200 may be the same as those of the first embodiment described above.

Further, in the electrophoresis ink filling step performed later, considering that the first electrode substrate 100 and the second electrode substrate 200 are adhered at the adhered parts and peeled off and the electrophoresis ink is charged, it is preferable that at least one of the first electrode substrate 100 and the second electrode substrate 200 is made of a material having flexibility. Also considering that the electrophoresis ink is charged into the cells of the structure 103 of the first electrode substrate 100, it is more preferable that the second electrode substrate 200 is made of a material having flexibility.

### <SECOND ADHESIVE LAYER FORMING STEP>

Next, parts of the second electrode substrate 200 which are not adhered to the first electrode substrate 100 (not-adhered parts) are peeled off from the first adhesive layer 105. With this process, a part of the first adhesive layer 105 formed on the upper surface of the structure 103 is transferred to the surface of the second electrode substrate 200. As a result, the second adhesive layer 203 having approximately the same pattern as the upper surface of the structure 103 can be formed on the surface of the second electrode substrate 200 (see Fig. 10D).

If the first adhesive layer 105 is made of the thermoplastic resin, when the second electrode substrate 200 is peeled off from the first electrode substrate 100 (structure 103), the parts to peel (not-adhered parts) may be heated and melted or softened. With this process, it is possible to perform peeling while the part not subjected to heating is left as the adhered part.

Further, it is preferable that after the second electrode substrate 200 is peeled from the structure 103, cooling is performed to solidify the first adhesive layer 105 remaining on the upper surface of the structure 103. With this step, it is possible to prevent the adhesive agent from flowing into the cells 104 and also to prevent the first adhesive layer 105 from being melted into the electrophoresis ink in the electrophoresis ink filling step performed later.

Furthermore, when the thermosetting adhesive agent or photocurable adhesive agent is used as the first adhesive layer 105, it is also preferable that after the second electrode substrate 200 is peeled off from the structure 103, the first adhesive layer 105 remaining on the upper surface of the structure 103 is semi-cured by minimum heating or exposure to ultraviolet radiation so that the adhesive agent can be solidified and in the second bonding step, the first adhesive layer 105 is heated or exposed to ultraviolet radiation again thereby to be adhered or cured completely.

In this way, as the first adhesive layer 105 in the electrophoresis ink filling step performed layer is cured more than the first adhesive layer 105 in the first bonding step, it is possible to form the second adhesive layer 203 on the second electrode substrate 200 smoothly, to prevent the adhesive agent from flowing into the cells 104 in the electrophoresis ink filling step and to prevent the first adhesive layer 105 from being melted into the electrophoresis ink. Here, the cured state is a state where viscosity is increased or flowability is reduced, or more concretely, the state means that the viscosity of the first adhesive layer 105 in their entirety in the electrophoresis ink filling step is increased (flowability is reduced) as compared with that of the first adhesive layer 105 in the first bonding step. Besides, the cured state includes a semi-cured state and the cured state of the first adhesive layer 105 in the electrophoresis ink filling step is a semi-cured state. The first adhesive layer 105 is further cured in the second bonding step.

As described above, as the structure 103 on the upper surface of which the first adhesive layer 105 is formed is brought into contact with the second electrode substrate 200 and then, partially adhered and the not-adhered parts are peeled, it is possible to easily form the second adhesive layer 203 on the surface of the second electrode substrate 200 with a pattern which is approximately the same as the upper surface of the structure 103.

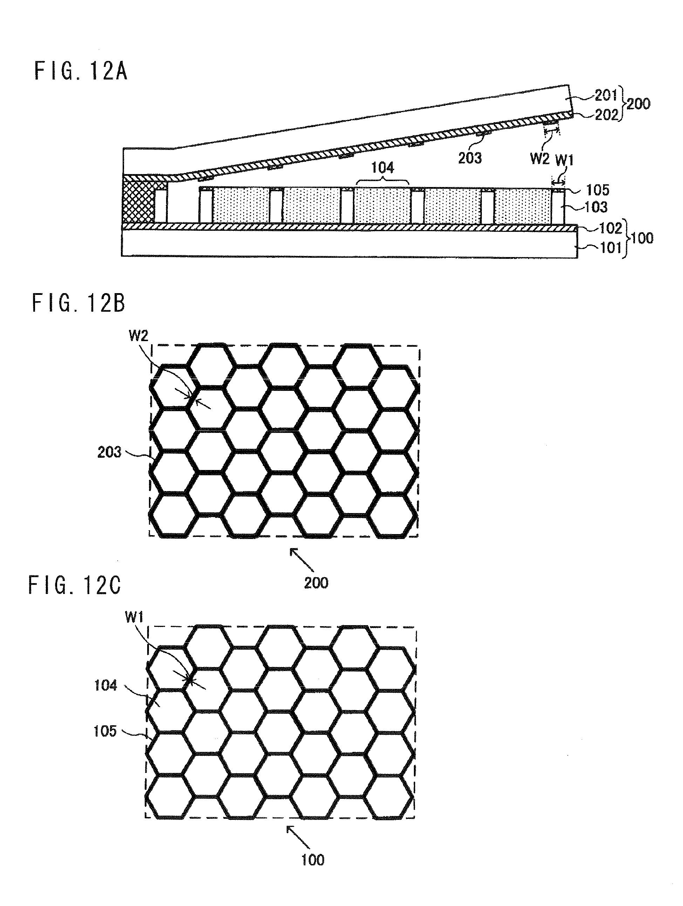

Here, as to the point that the pattern is approximately the same as the patter of the upper surface of the structure 103, this means that, as illustrated in Figs. 12A to 12C, the second adhesive layer 203 is formed on the second electrode substrate 200 corresponding to the pattern of the upper surface of the structure 103. Preferably, it means that the center of the width W1 of the first adhesive layer 105 coincides with the center of the width W2 of the second adhesive layer 203 in Fig. 12A. Further, as to the relationship between W1 and W2, it is preferable that W1 is equal to W2 (W1 = W2). However, in the above-described first bonding, if the first electrode substrate 100 is forcefully pressed against the second electrode substrate 200, either of the width of the structure 103 and the width of the second adhesive layer 203 may be greater (W1 > W2 or W1 < W2). Here, in Fig. 12, Figs. 12A is a cross sectional view, Fig. 12B is a plan view of the second electrode substrate 200 and Fig. 12C is a plan view of the first electrode substrate 100.

### <ELECTROPHORESIS INK FILLING STEP>

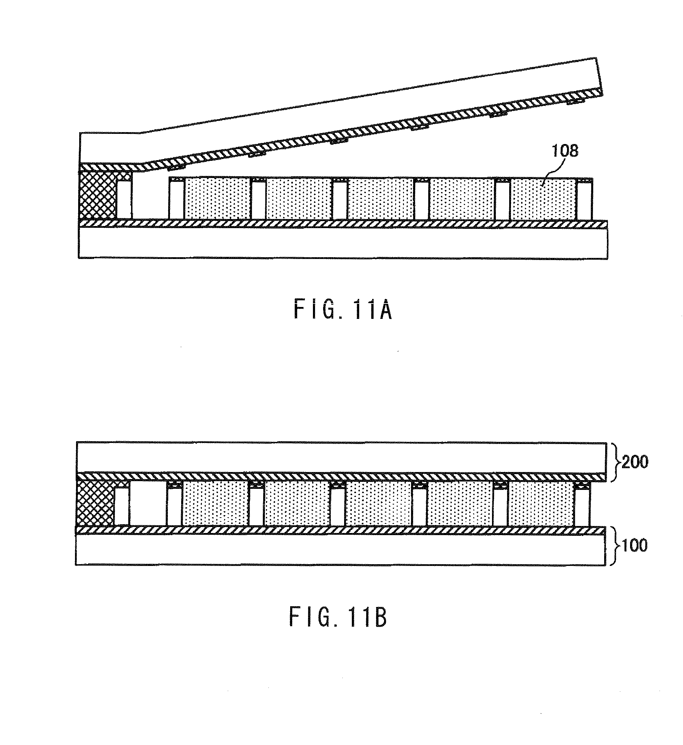

In the electrophoresis ink filling step, the cells 104 formed on the first electrode substrate 100 are filled with electrophoresis ink 108 (Fig. 11A). In this case, the first electrode substrate 100 and the second electrode substrate 200 are adhered to each other at the adhered part. The material and the like applied to the electrophoresis ink may be the same as those of the above-described embodiments.

It is preferable that the first adhesive layer 105 formed on the upper surface of the structure 103 is cooled and solidified before charging the electrophoresis ink. With this process, it is possible to prevent the first adhesive layer 105 from flowing into the cells 104 when charging the electrophoresis ink.

### <SECOND BONDING STEP>

In the second bonding step, the not-adhered parts of the second electrode substrate 200 are brought into contact with the upper surface of the structure 103 again and the second electrode substrate 200 and the upper surface of the structure 103 are adhered to each other via the second adhesive layer 203 and the first adhesive layer 105, thereby to seal the electrophoresis ink 108 in the cells 104 (see Fig. 11B).

As the first electrode substrate 100 and the second electrode substrate 200 are partially adhered to each other at the adhered part, it is possible to perform bonding with the adhered part as positioning reference. With this process, even when the adhesive layers of similar shape are formed on the opposite electrode substrates respectively and the adhesive layers formed on the respective electrode substrates are adhered to each other to be bonded, it is possible to reduce displacement of the first adhesive layer 105 and the second adhesive layer 203 effectively without complicated positioning with use of a positioning device such as an image detecting device. Further, as bonding is performed with reference to the adhered part, positioning can be simplified, which results in simplifying the bonding step (improving the efficiency of the bonding step).

According to the fourth embodiment, as the adhesive layers are formed in advance on the second electrode substrate 200 and the surfaces of the structure 103 to be adhered, it is possible to prevent the interfacial active agent in the electrophoresis ink 108 or the electrophoresis particles from intervening and to prevent reduction in adhesion. Here, there is a possibility that in bonding, the electrophoresis particles or interfacial active agent in the electrophoresis ink 108 may intervene between the first adhesive layer 105 and the second adhesive layer 203. However, as the first adhesive layer 105 and the second adhesive layer 203 are softer than the structure 103 and the second electrode substrate 200 and in the bonding step, each of the adhesive layers can be modified, mixed or to be miscible, it becomes possible to expect sufficient wettability, sufficient contact areas and anchor effect.

Further, the second adhesive layer 203 formed on the second electrode substrate 200 is one obtained by transferring the first adhesive layer 105 formed on the upper surface of the structure 103 partially to the second electrode substrate 200. In other words, the first adhesive layer 105 and the second adhesive layer 203 are the same in material and structure and have the same pattern shape. Accordingly, it is possible to improve adhesion between the first adhesive layer 105 and the second adhesive layer 203 and prevent the adhesive layer formed on an area other than the area overlapping the structure. With this structure, as the electrophoresis ink and the electrodes are formed without use of any adhesive agent, it is possible to reduce the drive voltage as compared with the case where the electrophoresis ink and the electrodes are formed via the adhesive agent.

### (FIFTH EMBODIMENT)

Next description is made about a fifth embodiment of the present invention.

After studying bonding of the electrode substrate and the upper surface of the structure, the present inventors have found that when the transfer roller is used in the technique of coating a coating liquid in a fine part, the higher the wettability of the coating liquid, the more the coating liquid is spread to a part other than a desired part to coat. And in coating, droplets of the coating liquid may be spread and an unintended place may be coated with the coating liquid. Or, like an LCD or electrophoresis display panel, if the device is used with the cells filled with ink or medium other than the coating liquid, this medium and the coating liquid may be miscible together or the coating liquid may be dissolved into the medium.

Further, in the method of transferring the adhesive agent, the adhesive agent remains much in the original base material and there may occur waste of the adhesive agent. And, there may occur a problem of poor adhesion of the transferred adhesive agent.

Then, in the fifth embodiment, description is made about the method for manufacturing a base material provided with an adhesive layer capable of applying coating liquid selectively to an intended part particularly in a part where the coating liquid in contact with medium other than the coating liquid, achieving excellent adhesion to the object to be coated and applying the coating liquid effectively in terms of the applied amount.

The present inventors have found that the thermoplastic material is used as the adhesive agent, and in the manufacturing step of the adhesive layer by transferring, the thermoplastic adhesive layer is heated and softened in bonding the film with the thermoplastic adhesive layer formed thereon to the upper surface of the structure formed on the substrate and in peeling the adhesive layer from the structure, thereby making it possible to increase the transferred amount of the thermoplastic material to the structure and to prevent the adhesive agent from being melted into the medium other than the coating liquid from the adhesive layer.

The method for manufacturing a material provided with an adhesive layer according to the fifth embodiment has: a step of forming structure on a surface of a first base material; a step of forming a film applied with a thermoplastic material on a surface of a second base material; a step of bringing a thermoplastic adhesive layer formed on surface of the second base material to upper surface of the structure provided on the surface of the first base material in a standing manner; a step of heating the thermoplastic adhesive layer and bonding the structure and the thermoplastic adhesive layer; and a step of while the thermoplastic adhesive layer is in a heated state, peeling the second base material from the first base material and transferring the thermoplastic adhesive layer onto the upper surface of the structure.

According to the fifth embodiment, it is possible to provide the method for manufacturing a base material provided with an adhesive layer, capable of applying coating liquid selectively to an intended part, achieving excellent adhesion to the object to be coated and applying the coating liquid effectively in terms of the applied amount. In the following, each step is described concretely with reference to the drawings.

### <CELL FORMING STEP>

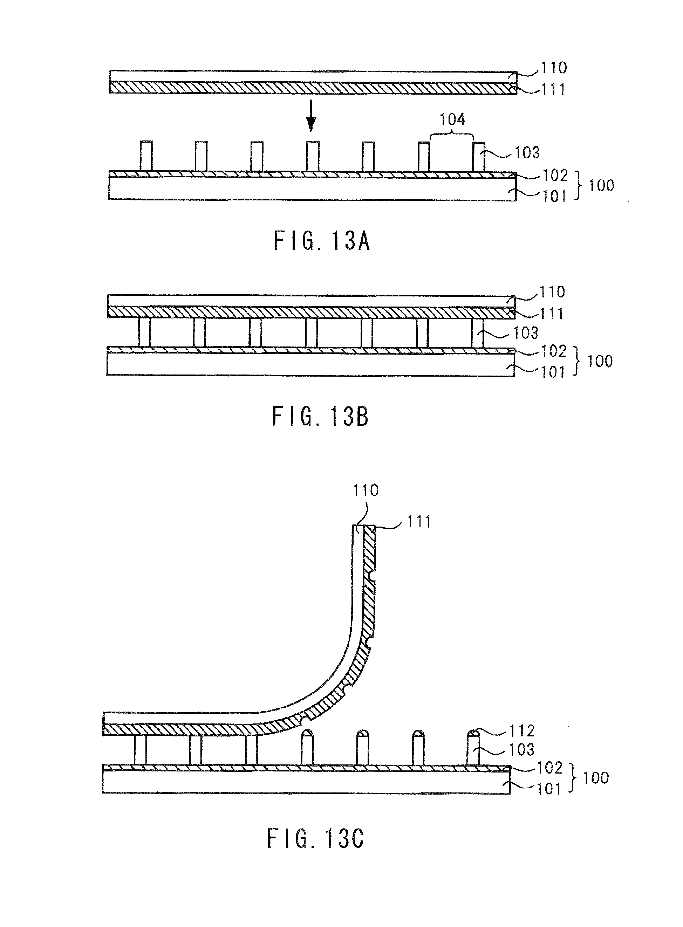

In the cell forming step, a plurality of cells 104 are formed by insulating structure 103 provided on the first electrode substrate 100 in a standing manner (see Fig. 13A). The cells 104 are separated from each other by the structure 103 and the shape of each cell may be a round, rectangular, square, hexagonal or any other shape.

The first electrode substrate 100 may be any substrate having electrodes. For example, the first electrode substrate 100 may be configured such that the first electrode layer 102 is provided on the first base material 101. In this case, the structure 103 is formed on the first electrode layer 102. Here, the materials, manufacturing methods and the like applied to the first base material 101, the first electrode layer 102 and the structure 103 may be the same as those of the first embodiment mentioned above.

### <THERMOPLASTIC MATERIAL LAYER FORMING STEP>

Next, in the thermoplastic material layer forming step, the thermoplastic material is applied to the surface of the film-shaped base material 110 thereby to form a thermoplastic material layer 111.

The thermoplastic material is preferably such a material that it is liquid when being applied to the surface of the base material 110 and, after solvent is removed after application, only the thermoplastic material remains.

The thermoplastic material layer 111 may be made of a hot melt adhesive agent, a paraffin wax which becomes solid at operating temperatures, polyethylene resin, or the like.

### <ADHESIVE AGENT TRANSFERRING STEP>

Then, in the adhesive layer transferring step, the adhesive layer 112 is formedon the upper surface of the structure 103 by the transferring method (see Fig. 13C).

First, the thermoplastic material 111 formed on the surface of the film-shaped base material 110 is brought into contact with the upper surface of the structure 103 (see Figs. 13A and 13B). Then, the thermoplastic material layer 111 is heated up to the softening temperature or more and the thermoplastic material is bonded to the upper surface of the structure 103.

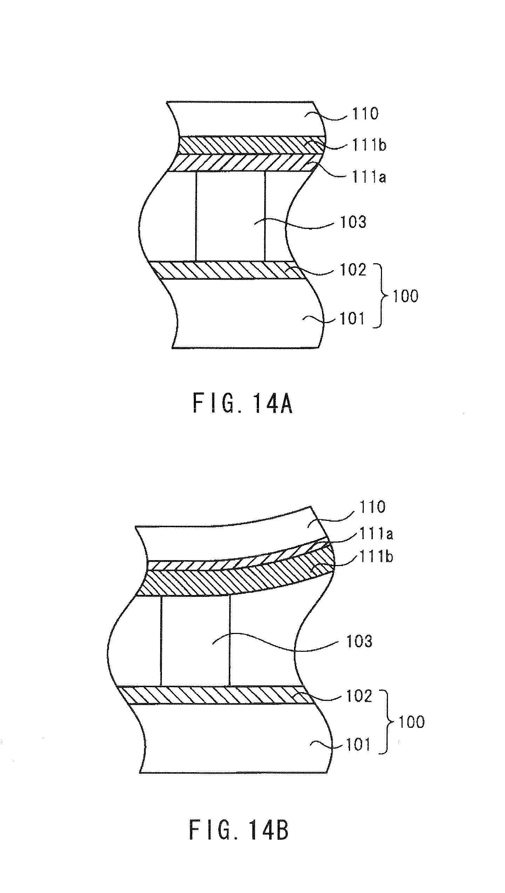

Here, the thermoplastic material layer 111 is heated by heating the first electrode substrate 100 side selectively. Accordingly, the thermoplastic material layer 111 is divided into a thermoplastic material layer 111a which is placed near the first electrode substrate 100 and is raised in temperature up to the softening temperature and a thermoplastic material layer 111b which is placed away from the first electrode substrate 100 and is not raised in temperature to the softening temperature (see Fig. 14A). In the thermoplastic material layer 111, as the part in contact with the structure 103 becomes the thermoplastic material layer 111a, it is possible to enhance adhesion of the thermoplastic material layer 111 to the structure 103.

Here, in the adhesive layer transferring step, as to the timing of softening the thermoplastic material layer 111, it may be after bringing the thermoplastic material layer 111 in a solid state into contact with the upper surface of the structure 103 or before the bringing the thermoplastic material layer 111 into contact with the upper surface of the structure 103. Here, as the thickness of the thermoplastic material layer 111 may vary at a waiting position, it is preferably softened immediately before or after bringing the thermoplastic material layer 111 into contact with the upper surface of the structure 103.

Further, in the bonding step, a load may be applied from the outside of the base material 110 so as to press the structure 103 and the thermoplastic material layer 111. For example, the load may be applied from the outside by pressing the base material 110 and the first electrode substrate 100 against each other by a roller-shaped pressing member in such a manner as to make the thermoplastic material layer 111 and the upper surface of the structure 103 in contact with each other. With this application of the external load, it is possible to enhance the adhesion of the structure 103 and the thermoplastic material layer 111.

The, the base material 110 is peeled off from the upper surface of the structure 103, and thereby, a part of the thermoplastic material layer 111 is transferred to the upper surface of the structure 103 and the adhesive layer 102 is formed on the upper surface of the structure 103 (see Fig. 13C). Here, in peeling, the thermoplastic material layer 111 is heated up to the softening temperature of the thermoplastic material or more.

Here, the thermoplastic material layer 111 is heated by heating the base material 110 side selectively. Accordingly, the thermoplastic material layer 111 is divided into a thermoplastic material layer 111a which is placed near the base material 110 and is raised in temperature up to the softening temperature and a thermoplastic material layer 111b which is placed away from the base material 110 and is not raised in temperature up to the softening temperature (see Fig. 14B). In the thermoplastic material layer 111, as a part which is in contact with the structure 103 becomes the thermoplastic material layer 111b of which the temperature does not reach the softening temperature, it is possible to increase the transferred amount of the thermoplastic material layer 111 to the structure 103. The more the thermoplastic material layer 111 is transferred to the structure 103, the larger the thickness of the adhesive layer 112 becomes, thereby enhancing the adhesion accordingly.

In the peeling step, it is possible to increase the transferred amount of the thermoplastic material layer 111 to the structure 103 by increasing the temperature of the base material 110 rather than the temperature of the first electrode substrate 100. As the base material 110 is heated selectively, generally, the temperature of the base material 110 becomes higher than that of the first electrode substrate 100. Therefore, in order to further increase the temperature differentials, the first electrode substrate 100 may be cooled selectively.

In this way, as in the adhesive layer transferring step, the thermoplastic material is transferred with use of a thermal laminator or the like, it is possible to suppress displacement of the adhesive layer and enhance the productivity.

The thickness of the adhesive layer 112 is determined based on the thickness and the kind of the thermoplastic material layer 111 formed on the base material 110 , the temperature of the thermal laminator, the load of the roller-shaped pressing member and the like. Here, there may be provided a spacer for adjusting the distance between the pressing member and the first electrode substrate 100 or the distance between the pressing member and a table for holding the first electrode substrate 100, thereby making it possible to obtain a desired thickness of the adhesive layer 112.

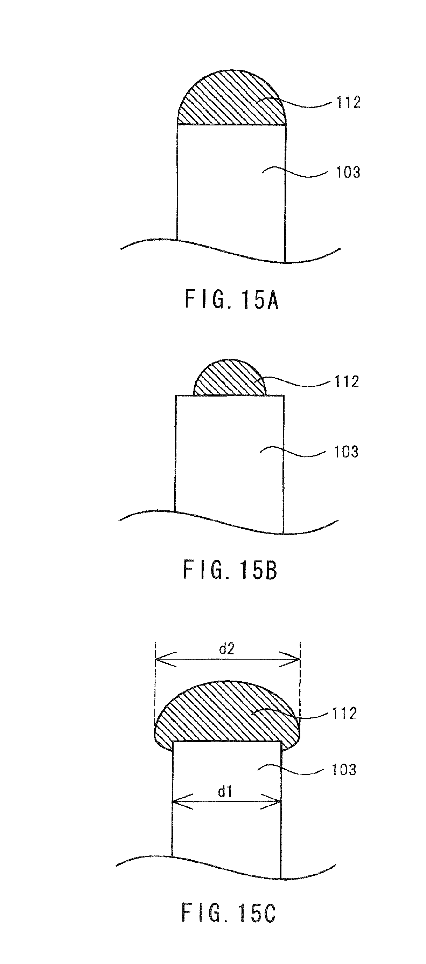

Fig. 15 are schematic diagrams illustrating relationship between the adhesive layer formed on the upper surface of the structure 103 and the transferred amount of the thermoplastic adhesive layer 111 to the structure 103. Fig. 15A illustrates the adhesive layer 112 when the thermoplastic material layer 111 is transferred to the entire part of the upper surface of the structure 103.

Fig. 15B illustrates the adhesive layer 112 of which the transferred amount of the thermoplastic material layer 111 to the structure 103 is smaller than that illustrated in Fig. 15A. The adhesive layer 112 can exert its effect as far as it covers a quarter of the entire area of the upper surface of each structure 103. In this case, it is possible to form the adhesive layer of excellent adhesion to the structure with a small amount of the thermoplastic material layer 111.

Fig. 15C illustrates the adhesive layer 112 of which the transferred amount of the thermoplastic material layer 111 to the structure 103 is larger than that illustrated in Fig. 15A. The adhesive layer 112 can exert its effect as far as the width d2 of the adhesive agent is smaller than twice the width d1 of the structure or, that is, the adhesive layer 112 meets the relationship of d2 < d1 x 2. In this case, it is possible to further enhance the adhesion of the adhesive layer 112.

As described above, according to the method for manufacturing a base material provided with an adhesive layer of the fifth embodiment, as the thermoplastic material layer 111 is heated up to the softening temperature while the thermoplastic material layer and the upper surface of the structure 103 are bonded to each other, it is possible to enhance the adhesion of the thermoplastic material layer 111 to the structure 103. Further, as the thermoplastic material layer 111 is removed from the upper surface of the structure 103 while the thermoplastic material layer is heated up to the softening temperature, it is possible to increase the transferred amount of the thermoplastic material layer 111 to the structure 103. As a result, it is possible to manufacture a base material provided with an adhesive layer capable of achieving good adhesion to the structure 103 and suppressing reduction in adhesion.

The following description is made by way of example of a method for manufacturing an electrophoresis display device using the base material provided with an adhesive layer obtained through the above-described steps.

### <ELECTROPHORESIS INK FILLING STEP>

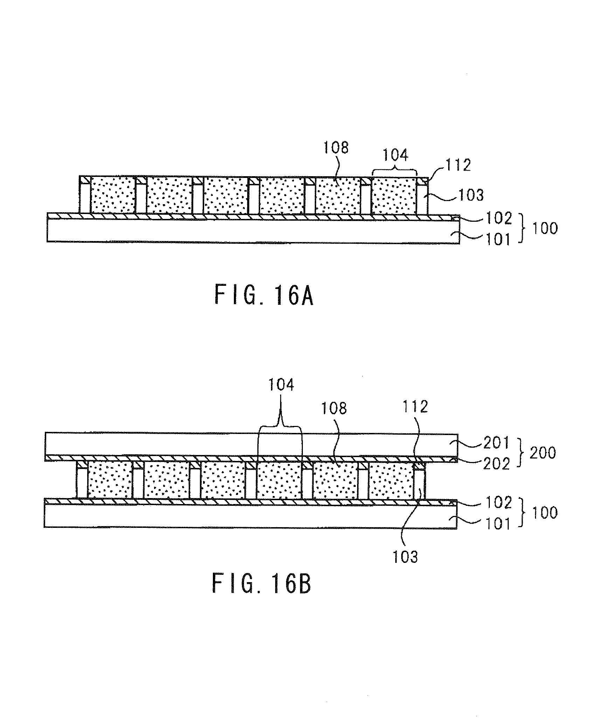

In the electrophoresis ink filling step, each of the cells 104 formed on the first electrode substrate 100 is filled with electrophoresis ink 108 (see Fig. 16A). The electrophoresis ink 108 may be charged by various methods including coating with use of a die coater, printing with use of screen printing, filling with use of inkjet or dispenser. The material and the like applied to the electrophoresis ink may be the same as those of the first embodiment described above.

Here, there is need to solidify the adhesive layer 112 formed on the upper surface of the structure 103 before the cells 104 are filled with the electrophoresis ink 108. In order to solidify the adhesive layer 112, for example, the adhesive layer 112 may be cooled after the adhesive agent transferring step. In this way, if the adhesive layer 112 is solidified before charging the electrophoresis ink 108, even when the electrophoresis ink 108 comes into contact with the adhesive layer 112, the adhesive layer 112 can be prevented from being melted into the electrophoresis ink 108.

As to timing of solidifying the adhesive layer 112, it is preferably performed after peeling the base material 110 from the upper surface of the structure 103 in the adhesive agent transferring step and before charging the electrophoresis ink 108 in the electrophoresis ink filling step.

### <SUBSTRATE BONDING STEP>

In the substrate bonding step, the first electrode substrate 100 and the second electrode substrate 200 are placed opposite to each other and the upper surface of the structure 103 and the second electrode substrate 200 are brought into contact with each other via the adhesive layer 112, thereby to seal the electrophoresis ink 108 in the cells 104 (see Fig. 16B). Then, the adhesive layer 112 is softened by the heating processing so as to be adherable, before the upper surface of the structure 103 is in contact with the second electrode substrate 200. That is, the previously solidified adhesive layer 112 is softened again before the electrophoresis ink filling step.

In order to seal the electrophoresis ink 108 in the cells 104, for example, after the adhesive layer 112 and the second electrode substrate 200 are brought into contact, the adhesive layer 112 is raised in temperature up to the softening temperature or more, the roller-shaped pressing member is used to continuously press the first electrode substrate 100 and the second electrode substrate 200 against each other (after thermocompression bonding), and then, the adhesive layer 112 is cooled to be solidified.

The second electrode substrate 200 may be any substrate having electrodes. For example, the second electrode substrate 200 may be configured such that the second electrode layer 202 is provided on the second base material 201. Here, the second base material 201 may be made of any of the materials mentioned in the above explanation of the first base material 101. And, the second electrode layer 202 may be made of any of the materials mentioned in the above explanation of the first electrode layer 102.

In the electrophoresis display device, if the second electrode substrate 200 is a front-side electrode substrate, displayed characters and the like formed with the electrophoresis ink are visually recognized via the second electrode substrate 200. Accordingly, it is preferable that the second base material 201 and the second electrode layer 202 are formed of materials having translucency.

Here, in the substrate bonding step, it is preferable that the temperature (T2) of softening the adhesive layer 112 is lower than the boiling temperature (T3) of the electrophoresis ink 108 (T3 > T2). If the temperature higher than the boiling temperature of the electrophoresis ink 108 is applied to the adhesive layer 112, the electrophoresis ink 108 is volatized and reduced. Accordingly, the respective materials need to be selected such that the softening temperature of the thermoplastic material layer 111 becomes lower than the boiling temperature of the electrophoresis ink 108.

Besides, in the substrate bonding step, the temperature (T2) of softening the adhesive layer 112 is preferably lower than the temperature (T1) of softening the thermoplastic material layer 111 to be adherable in the adhesive agent transferring step (T1 > T2). This is because in the adhesive agent transferring step, it is preferable that the high temperature (T1) is applied in order to make the thermoplastic material layer 111 fully melted inside and peel it from the base material 110, while in the substrate bonding step, it is necessary to soften the adhesive layer 112 at the temperature not to melt (T2) so as to maintain the shape of the adhesive layer 112.

Further, in order to increase reliability in transferring, it is preferable that the wettability of the thermoplastic adhesive layer 111 and the structure 103 is higher than the wettability of the base material 110 and the thermoplastic adhesive layer 111. That is, it is preferable that the respective materials are selected in such a manner that the contact angle (θ₁) of the interface between the structure 103 and the thermoplastic adhesive layer 111 is equal to or smaller than the contact angle (θ₂) of the interface of the thermoplastic adhesive layer 111 and the base material 110 (θ₁ ≤ θ₂).

As the cells are closed by bringing the adhesive layer 112 formed on the upper surface of the structure 103 into contact with the second electrode substrate 200, it is possible to prevent flocculation or maldistribution of the electrophoresis particles contained in the electrophoresis ink 108.

Next description is made about the examples 1 to 5, which were conducted in order to clarify the effects of the present invention. However, the methods of the examples are by no means limiting. Here, the examples 1 to 5 correspond to the above-mentioned embodiments 1 to 5, respectively.

### EXAMPLE 1

Next description is made about an example 1. Here, an electrophoresis display device is manufactured with use of the method described below and evaluated.

First, PES-375S40 (the thermoplastic material (hot melt resin) made by Toagosei Co., Ltd., R&B softening temperature 120 °C, Tg = 23 °C) diluted with a solvent (toluene: methyl ethyl ketone = 80:20) was applied to the PET film with remover with the film thickness of 12 µm by use of a comma roll, and the material was dried. Then, the PET film with the thermoplastic adhesive layer formed thereon was formed.

### <CELL FORMING STEP>

Next, acrylate resist film with a thickness of 40 µm was bonded to the first electrode substrate (PET film with an ITO film formed as transparent electrode) by a laminator and the photoresist method was used to form the structure.

### <ADHESIVE LAYER TRANSFERRING STEP>

Next, the PET film with the thermoplastic adhesive layer formed thereon and the first electrode substrate with the structure formed thereon were heated by a heat laminator at the temperature of 125 °C, and a part of the thermoplastic adhesive layer was transferred to the upper surface of the structure. The thickness of the thermoplastic adhesive layer formed on the upper surface of the structure is average 7 µm and the thermoplastic adhesive layer was not seen flowing to a part other than the structure.

### <ELECTROPHORESIS INK FILLING STEP>

Next, after the thermoplastic adhesive layer formed on the upper surface of the structure is cooled up to the ambient temperature and solidified, electrophoresis ink (white particles (titanium oxide subj ected to oleophilic surface treatment, negatively charged) , black particles (acrylic particles colored in carbon black (positively charged), ink made of n-dodecane (boiling temperature 216 °C)) was charged into the cells formed by the structure on the first electrode substrate with use of a die coater. After the cells were filled with the electrophoresis ink, the upper surface of the structure was observed. Then, it was found that the electrophoresis ink and the thermoplastic materials were not miscible or mixed, and the adhesive agent was not seen peeled off or flowing out.

Next, the ultraviolet cure adhesive agent was applied to the outer periphery of each of the parts filled with the electrophoresis ink (cell formed part), the ultraviolet cure adhesive agent being a main seal (outer periphery seal agent) of the electrophoresis display device.

### <SUBSTRATE BONING STEP>

Next, the first electrode substrate filled with the electrophoresis ink and the second electrode substrate (PET film with the ITO film formed as transparent electrode) were heated by the thermal laminator until the second electrode substrate was raised in temperature to the 80 °C and bonded to each other, and then, the ultraviolet cure adhesive agent as main seal was exposed to ultraviolet radiation and cured, thereby the electrophoresis display device being manufactured.

### (EVALUATION)

Between the electrodes of the electrophoresis display device manufactured by the example 1, voltages of +50 V and -50V were applied alternately to switch display between black and white, which resulted in excellent display. Besides, the black-and-white display switching was repeated 10,000 times while the electrophoresis display device was placed vertical to the ground, which resulted in no deterioration of display performance due to movement of the electrophoresis particles between the cells. Further, the electrophoresis display device was placed stable at the temperature of 50 °C for three months and then, the same display switching as mentioned above was performed, which resulted in there was found no breakage of the display device (peeling off of the substrates, leakage of the electrophoresis ink and the like) and excellent display could be obtained without any change from the initial state. Furthermore, the electrophoresis display device was not broken even after the electrophoresis display device was dropped fifty times from the height of 1.5 m or the electrophoresis display device was subjected to continuous micro vibration for 10 hours.

As described above, in the electrophoresis display device manufactured by the method of the example, the adhesive layer was selectively formed only on the upper surface of the structure effectively, any damage to the electrophoresis ink in manufacturing of the display device could be prevented, and the electrophoresis display device manufactured exhibited excellent display performance. Further, as the miscibility and mixing of the electrophoresis ink and the adhesive agent was suppressed, the electrophoresis display device manufactured exhibited excellent durability.

### EXAMPLE 2

Next description is made about an example 2. Here, the electrophoresis display devices were manufactured by the following example, comparative example and reference example and evaluated.

### (EXAMPLE)

### <CELL FORMING STEP>

Acrylate resist film was bonded to the first electrode substrate (ITO-PET film) by a vacuum laminator, and the photoresist method was used to form the structure with a honeycomb pattern.

### <FIRST ADHESIVE LAYER FORMING STEP>

Thethermoplasticmaterial (hotmeltresin) dilutedwithasolvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <SECOND ADHESIVE LAYER FORMING STEP>

The thermoplastic adhesive agent diluted with the solvent described above was applied to the second electrode substrate (ITO-PET film) using the screen printing in such a manner as to coincide with the honeycomb pattern of the structure, and the thermoplastic adhesive agent was dried. The thickness of the dried thermoplastic adhesive agent was 3 µm.

### <ELECTROPHORESIS INK FILLING STEP>

After the thermoplastic adhesive agents formed on the upper surface of the structure and the second electrode substrate were cooled, the first electrode substrate was applied with the electrophoresis ink (white particles (titanium oxide subjected to oleophilic surface treatment, negatively charged), black particles (acrylic particles colored in carbon black (positively charged), ink made of n-dodecane (boiling temperature 216 °C)) with use of a die coater, and the cells by the structure were filled with the electrophoresis ink.

Next, in the outer periphery of the part applied with the electrophoresis ink (cell formed part), a main seal part was formed with use of the ultraviolet cure adhesive agent.

### <BONDING STEP>

The second electrode substrate and the first electrode substrate applied with the electrophoresis ink were positioned to each other in such a manner that the first adhesive layer and the second adhesive layer overlapped each other. After that, the first electrode substrate and the second electrode substrate were heated by the thermal laminator and the main seal part formed at the outer periphery of the cell formed part was exposed to ultraviolet radiation thereby to cure the ultraviolet cure adhesive agent. By this process, the electrophoresis display panel was manufactured.

Next description is made about a comparative example.

### (COMPARATIVE EXAMPLE)

### <CELL FORMING STEP>

Acrylate resist film with a thickness of 50 µm was bonded to the first electrode substrate (ITO-PET film) by a vacuum laminator, and the photoresist method was used to form the structure.

### <FIRST ADHESIVE LAYER FORMING STEP>

The thermoplastic material (hot melt resin) diluted with a solvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (the same as that in the example) with use of the die coater, and the cells by the structure were filled with the electrophoresis ink.

Next, in the outer periphery of the part applied with the electrophoresis ink (cell formed part), a main seal part was formed with use of the ultraviolet cure adhesive agent.

### <BONDING STEP>

The second electrode substrate and the first electrode substrate applied with the electrophoresis ink were bonded to each other again by being subjected to the thermal laminator. And then, the main seal part formed at the outer periphery of the cell formed part was exposed to ultraviolet radiation thereby to cure the ultraviolet cure adhesive agent. By this process, the electrophoresis display panel was manufactured.

That is, the comparative example is different from the above-described example in that the thermoplastic adhesive layer is only formed on the upper surface of the structure (adhesive layer is not formed on the second electrode substrate).

### (REFERENCE EXAMPLE)

### <CELL FORMING STEP>

Acrylate resist film was bonded to the first electrode substrate (ITO-PET film) by a vacuum laminator, and the photoresist method was used to form the structure with a honeycomb pattern.

### <FIRST ADHESIVE LAYER FORMING STEP>

The thermoplastic material (hotmeltresin) dilutedwithasolvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <SECOND ADHESIVE LAYER FORMING STEP>

The thermoplastic adhesive agent diluted with the solvent described above was applied to the second electrode substrate (ITO-PET film) using a spin coater and dried in such a manner that the thickness of the dried thermoplastic adhesive agent was 1 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (white particles (titanium oxide subjected to oleophilic surface treatment, negatively charged), black particles (acrylic particles colored in carbon black (positively charged), ink made of n-dodecane (boiling temperature 216 °C)) with use of the die coater, and the cells by the structure were filled with the electrophoresis ink.

Next, in the outer periphery of the parts applied with the electrophoresis ink (cell formed parts), a main seal part was formed with use of the ultraviolet cure adhesive agent.

### <BONDING STEP>

The second electrode substrate and the first electrode substrate applied with the electrophoresis ink were positioned to each other in such a manner that the second adhesive layer and the second adhesive layer overlapped each other. After that, the first electrode substrate and the second electrode substrate were bonded by being subjected to the thermal laminator, and the main seal part formed at the outer periphery of the cell formed part was exposed to ultraviolet radiation thereby to cure the ultraviolet cure adhesive agent. By this process, the electrophoresis display panel was manufactured.

That is, the reference example is different from the above-described embodiment in that the second adhesive layer is formed over the entire part of the second electrode substrate.

### (EVALUATION)

### <ADHESION EVALUATION>

Adhesion was evaluated of the configuration (example) where the upper surface of the structure and the surface of the second electrode substrate (formed with a pattern which was approximately the same as the pattern of the upper surface of the structure) were bonded to each other with the adhesive agent formed on both of the upper surface of the structure and the second electrode substrate, the configuration (comparative example) where the upper surface of the structure and the second electrode substrate were bonded to each other with the adhesive agent formed only on the upper surface of the structure and the configuration (reference example) where the upper surface of the structure and the surface of the second electrode substrate were bonded to each other with the adhesive agent formed on both of the upper surface of the structure and the second electrode substrate.

Evaluation of adhesion was performed on the configurations used in the example (between the structure with the first adhesive layer formed thereon and the second electrode substrate with the second adhesive layer formed thereon with approximately the same pattern as the pattern of the upper surface of the structure), the comparative example (between the structure with the first adhesive layer formed thereon and the second electrode substrate (with no adhesive layer)) and the reference example (between the structure with the first adhesive layer formed thereon and the second electrode substrate with the second adhesive layer formed thereon), as to the three states, that is, the state (a) where nothing intervened, the state (b) where dodecane as solvent intervened and the state (c) where the electrophoresis ink intervened. The electrophoresis ink used was the same as those used in the example and the comparative example. Measurement was conducted in accordance with the conditions JIS K6854 "180 ° T type peel strength test". Specifically, the peel speed 50mm/s, the peel distance 70 mm and first 10 mm and last 10 mm were eliminated from the data. The evaluation results are shown in Table 1.

### <PARTICLE MOVEMENT EVALUATION>

The electrophoresis display panels manufactured by the example, the comparative example and the reference example were placed vertically (standing vertical to the ground) and voltages +50 V and -50 V were applied alternately between the electrodes of each of the electrophoresis display panels to switch the display between white and black 10,000 times. Then, the initial reflectivity and the reflectivity after 10,000 time switching were measured and movement of the particles (flocculation and maldistribution) was observed visually, which results are shown in Table 2.

Measurement of reflectivity was performed with use of a spectrocolorimeter (SC-T(P), manufactured by Suga Test Instruments Co. Ltd.). The measuring conditions were arranged as follows:
Optical conditions: diffused lighting 8°, light reception d8 system
(excluding mirror reflection)
Light source: 12V 50W halogen lamp
Color measuring conditions: D65 light 10° eyesight
Color measuring area: 5 φ

**[Table 1]**

| | ADHESION (N) | | |
|---|---|---|---|
| | (a) | (b) | (c) |
| EXAMPLE OF PRESENT INVENTION | 1.53 | 0.84 | 0.29 |
| COMPARATIVE EXAMPLE | 0.63 | 0.50 | Unmeasurable |
| REFERENCE EXAMPLE | 1.54 | 0.84 | 0.29 |

**[Table 2]**

| | REFLECTIVITY (%) | | | | PARTICLES MOVED? |
|---|---|---|---|---|---|
| | INITIAL | | AFTER 10,000-TIME DISPLAY | | |
| | White | Black | White | Black | |
| EXAMPLE OF PRESENT INVENTION | 45.8 | 2.1 | 45.7 | 2.2 | No |
| COMPARATIVE EXAMPLE | 46.0 | 2.2 | 42.1 | 2.7 | Yes |
| REFERENCE EXAMPLE | 38.7 | 4.2 | 38.6 | 4.2 | No |

As seen from Table 1, the example where the adhesive layer is formed on both of the upper surface of the structure formed on the first electrode substrate and the second electrode substrate exhibits higher adhesion than the comparative example where the adhesive layer is only formed on the upper surface of the structure formed on the first electrode substrate. And, as seen from Table 2, in the display device where the adhesive layer is only formed on the upper surface of the structure formed on the first electrode substrate like in the comparative example, movement of the particles was caused by a gap created between the structure and the electrode substrate due to poor adhesion, however in the example, no particle movement was caused.

Further, comparing the example with the reference example, no difference is seen between evaluations of the adhesion and particle movement, however, difference is found in display performance in the initial reflectivity and the reflectivity after 10,000 time display switching. This is because in the example, the second adhesive layer formed on the second electrode substrate has a pattern which is approximately the same as the pattern of the upper surface of the structure and in the reference example, the second adhesive layer is formed over the entire part of the second electrode substrate. In other words, in the reference example, as the electrode surface is covered by the second adhesive layer covers, the display performance is reduced, while in the example, as the second adhesive layer is formed only on the parts corresponding to the structure, the display performance is maintained excellent without being reduced.

### EXAMPLE 3

Next description is made about an example 3. Here, the electrophoresis display devise was manufactured by the following example, comparative example and reference example and evaluated.

### (EXAMPLE)

### <CELL FORMING STEP>

Acrylate resist film was bonded to the first electrode substrate (ITO-PET film) by a vacuum laminator, and the photoresist method was used to form the structure with a honeycomb pattern.

### <FIRST ADHESIVE LAYER FORMING STEP>

Thethermoplasticmaterial (hotmeltresin) dilutedwithasolvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <CONTACT STEP, SECOND ADHESIVE LAYER FORMING STEP>

The second electrode substrate was brought into contact with the upper surface of the structure with the thermoplastic adhesive layer formed on the surface thereof, and they are subj ected to heating by the thermal laminator at the temperature of 120 °C. The second electrode substrate was peeled off in a heated state and a part of the thermoplastic adhesive layer formed on the upper surface of the structure was transferred to the surface of the second electrode substrate. The thickness of the thermoplastic adhesive layer formed on the upper surface of the structure is 3 to 6 µm, and the thickness of the thermoplastic adhesive layer formed on the surface of the second electrode substrate was 1 to 4 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (white particles (titanium oxide subjected to oleophilic surface treatment, negatively charged), black particles (acrylic particles colored in carbon black (positively charged), ink made of n-dodecane (boiling temperature 216 °C)) with use of the die coater, and the cells by the structure were filled with the electrophoresis ink.

Next, in the outer periphery of the part applied with the electrophoresis ink (cell formed part), a main seal part was formed with use of the ultraviolet cure adhesive agent.

### <BONDING STEP>

The second electrode substrate and the first electrode substrate applied with the electrophoresis ink were positioned to each other in such a manner that the second adhesive layer and the second adhesive layer overlapped each other. After that, the first electrode substrate and the second electrode substrate were bonded by being subjected to the thermal laminator, and the main seal part formed at the outer periphery of the cell formed part was exposed to ultraviolet radiation thereby to cure the ultraviolet cure adhesive agent. By this process, the electrophoresis display panel was manufactured.

Next description is made about a comparative example.

### (COMPARATIVE EXAMPLE)

### <CELL FORMING STEP>

Acrylate resist film was bonded to the first electrode substrate (ITO-PET film) by a vacuum laminator with a thickness of 50 µm, and the photoresist method was used to form the structure.

### <FIRST ADHESIVE LAYER FORMING STEP>

The thermoplastic material (hotmeltresin) dilutedwithasolvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (the same as that in the example) with use of the die coater, and the cells by the structure were filled with the electrophoresis ink.

Next, in the outer periphery of the part applied with the electrophoresis ink (cell formed part), a main seal part was formed with use of the ultraviolet cure adhesive agent.

### <BONDING STEP>

The second electrode substrate and the first electrode substrate applied with the electrophoresis ink were bonded again by being subjected to the thermal laminator, and the main seal part formed at the outer periphery of the cell formed part was exposed to ultraviolet radiation thereby to cure the ultraviolet cure adhesive agent. By this process, the electrophoresis display panel was manufactured.

That is, the comparative example is different from the above-mentioned example in that the thermoplastic adhesive layer was only formed on the upper surface of the structure (the adhesive layer was not formed on the second electrode substrate).

### (REFERENCE EXAMPLE)

### <CELL FORMING STEP>

Acrylate resist film was bonded to the first electrode substrate (ITO-PET film) by a vacuum laminator, and the photoresist method was used to form the structure with a honeycomb pattern.

### <FIRST ADHESIVE LAYER FORMING STEP>

The thermoplastic material (hotmeltresin) diluted with a solvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby parts of the thermoplastic material layer formed on the PET film were transferred to the upper surface of the structure. The film thickness of the thermoplastic adhesive layer formed on the upper surface of the structure was about 6 to 8 µm.

### <SECOND ADHESIVE LAYER FORMING STEP>

The thermoplastic adhesive agent diluted with the solvent described above was applied to the second electrode substrate (ITO-PET film) using a spin coater and dried in such a manner that the thickness of the dried thermoplastic adhesive agent was 1 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (white particles (titanium oxide subjected to oleophilic surface treatment, negatively charged), black particles (acrylic particles colored in carbon black (positively charged), ink made of n-dodecane (boiling temperature 216 °C)) with use of the die coater, and the cells by the structure were filled with the electrophoresis ink.

Next, in the outer periphery of the part applied with the electrophoresis ink (cell formed part), a main seal part was formed with use of the ultraviolet cure adhesive agent.

### <BONDING STEP>

The second electrode substrate and the first electrode substrate applied with the electrophoresis ink were positioned to each other in such a manner that the second adhesive layer and the second adhesive layer overlapped each other. After that, the first electrode substrate and the second electrode substrate were bonded by being subjected to the thermal laminator, and the main seal part formed at the outer periphery of the cell formed part was exposed to ultraviolet radiation thereby to cure the ultraviolet cure adhesive agent. By this process, the electrophoresis display panel was manufactured.

That is, the reference example is different from the above-described examples in that the second adhesive layer is formed on the entire part of the second electrode substrate.

### (EVALUATION)

The electrophoresis display panels manufactured by the processes of the examples, comparative example and reference example were evaluated in the following test method.

### (EVALUATION 1)

### <REFLECTIVITY MEASUREMENT>

Reflectivity measurement was performed with use of a spectrocolorimeter (SC-T(P), manufactured by Suga Test Instruments Co. Ltd.). The measuring conditions were arranged as follows:

Optical conditions: diffused lighting 8°, light reception d8 system
(*excluding mirror reflection)
Light source: 12V 50W halogen lamp
Color measuring conditions: D65 light 10° eyesight
Color measuring area: 15 φ
Operation: The device was placed stable on a desk in parallel with the top plate of the desk and measurement was conducted after 100-time driving.

### <DETERMINATION METHOD>

Determination was made on the basis of the contrast value (= black reflectivity/white reflectivity), as follows
○: Excellent display (contrast value equal to or greater than 10) Δ: Operative but not good (contrast value from 10 to 2)
X: hardly operative (contrast value equal to or smaller than 2)

### (EVALUATION 2)

### <ADHESION>

Measurement of adhesion was performed in accordance with the conditions JIS K6854 "180 ° T type peel strength test", by cutting a part of the electrophoresis display panel with a width of 25 mm and bending the opposite substrates at one end by 90 degrees outside.

### <DETERMINATION METHOD>

Adhesion was determined based on visual observations.
o: Excellent adhesion over entire surface (adhesion 0.5 N/25 mm or more, a sign of the adhered part is seen continuous over the entire surface)
Δ: Adhered but with week adhesion (adhesion 0.5 N/25 mm or less)
X: Not adhered (adhesion unmeasurable, a sign of the adhered part is seen discontinuous)

### (EVALUATION 3)

### <SUPPRESSION OF PARTICLE MOVEMENT>

Suppression of particle movement was conducted by placing the electrophoresis display panel in a standing manner, vertical to the gravity direction and operating the panel continuously 10,000 times.

### <DETERMINATION METHOD>

Whether there appeared precipitation inside the display part or not was determined based on visually observed results.
o: No precipitation is found all over the display.
Δ: Precipitation is found at a part of the display.
X: Precipitation is found all over the display, and some parts are not displayable.

The results of the evaluations 1 to 3 are shown in Table 3.

**[Table 3]**

| | ADHESIVE AGENT APPLIED TO: | EVALUATION 1 DISPLAY PERFORMANCE | EVALUATION 2 ADHESION | EVALUATION 3 PARTICLE MOVEMENT IS SUPPRESSED? |
|---|---|---|---|---|
| EXAMPLE OF PRESENT INVENTION | Both surfaces with a pattern | ○ | ○ | ○ |
| COMPARATIVE EXAMPLE | Only one surface (surface of the structure only) | ○ | × | Δ |
| REFERENCE EXAMPLE | Both surfaces (all over the surface) | × | ○ | ○ |

As seen from Table 3, higher adhesion is achieved in the example where the adhesive layer is formed on both of the upper surface of the structure formed on the first electrode substrate and the second electrode substrate, as compared with the comparative example that the adhesive layer is formed only on the upper surface of the structure formed on the first electrode substrate. Further, in the electrophoresis display device with the adhesive layer only formed on the upper surface of the structure formed on the first electrode substrate like in the comparative example, there was created a gap between the structure and the electrode substrate due to insufficient adhesion and the particles moved. On the other hand, in the example, no movement of the particles was seen.

Further, comparing the example with the reference example, they are not different in evaluation of the adhesion and particle movement, however, they are different in contrast values. This is because in the example, the second adhesive layer is formed on the second electrode substrate with the pattern which is approximately the same as the pattern of the upper surface of the structure while in the reference example, the second adhesive layer is formed on the entire surface of the second electrode substrate. That is, in the reference example, the electrode surface is covered with the second adhesive layer, which causes reduction in display performance. On the other hand, in the example, the second adhesive layer is formed corresponding to the structure, and therefore, excellent display performance can be maintained without being lost.

### [EXAMPLE 4]

The following description is made about an example 4. Here, the electrophoresis display device was manufactured by the method described below and evaluated.

### <CELL FORMING STEP>

Acrylate resist film was bonded to the first electrode substrate (ITO-PET film) by a vacuum laminator with a thickness of 50 µm, and the photoresist method was used to form the structure with a honeycomb pattern.

### <FIRST ADHESIVE LAYER FORMING STEP>

Thethermoplasticmaterial (hotmeltresin) dilutedwithasolvent was applied to the PET film with remover with the film thickness of 12 µm by use of a comma roll and the material was dried. Then, the PET film with the thermoplastic adhesive layer formed thereon and the first electrode substrate with the structure formed thereon were subjected to heating by a thermal laminator at 120 °C and the PET film in a heated state was peeled off and thereby a part of the thermoplastic material layer formed on the PET film was transferred to the upper surface of the structure. The film thickness of the thermoplastic adhesive layer formed on the upper surface of the structure was about 6 to 8 µm.

### <ADHERED AREA FORMING STEP>

One end (area as an adhered part) of the first substrate with the structure and subsequently the thermoplastic adhesive layer formed thereon was applied with ultraviolet cure adhesive agent, and the ultraviolet cure adhesive agent was formed.

### <FIRST BONDING STEP>

The second electrode substrate (ITO-PET film) was brought into contact with the upper surface of the structure formed on the first electrode substrate. Then, one end of the first electrode substrate was exposed to ultraviolet radiation and thereby the first electrode substrate and the second electrode substrate were adhered at the one end.

### <SECOND ADHESIVE LAYER FORMING STEP>

The first electrode substrate having the structure on which the thermoplastic adhesive layer is formed and the second electrode substrate were heated by a thermal laminator at 120 °C, the not-adhered parts in a heated state were peeled off and the thermoplastic adhesive layer formed on the upper surface of the structure was partially transferred to the surface of the second electrode substrate. The thickness of the thermoplastic adhesive layer formed on the upper surface of the structure was 3 to 6 µm, and the thickness of the thermoplastic adhesive layer formed on the second electrode substrate was 1 to 4 µm.

### <ELECTROPHORESIS INK FILLING STEP>

After the thermoplastic adhesive agent formed on the upper surface of the structure and the second electrode substrate was cooled, the first electrode substrate was applied with the electrophoresis ink (white particles (titanium oxide subjected to oleophilic surface treatment, negatively charged), black particles (acrylic particles colored in carbon black (positively charged), ink made of n-dodecane (boiling temperature 216 °C)) with use of a die coater, and the cells by the structure were filled with the electrophoresis ink.

Next, in the outer periphery of the part applied with the electrophoresis ink (cell formed part), the ultraviolet cure adhesive agent was used to form a main seal part at a part of the outer periphery other than the adhered part.

### <BONDING STEP>

The second electrode substrate and the first electrode substrate applied with the electrophoresis ink were positioned to each other with reference to the adhered parts in such a manner that the second adhesive layer and the second adhesive layer overlapped each other. After that, the first electrode substrate and the second electrode substrate were heated by the thermal laminator and the main seal part formed at the outer periphery of the cell formed part was exposed to ultraviolet radiation thereby to cure the ultraviolet cure adhesive agent. By this process, the electrophoresis display panel was manufactured.

By application of the manufacturing method illustrated in this example as described above, if the adhesive layer of similar shape are formed at the opposed electrode substrates respectively, it is possible to manufacture the adhesive layer easily with high accuracy (with reduction in pattern variation). Further, when performing the step of adhering and bonding the adhesive layer of similar shape formed on the opposite electrode substrates respectively, the adhered parts are used as a reference of positioning, and thereby it is possible to eliminate the need to perform complicated positioning with use of a positioning device such as an image detecting device, and to bond the first adhesive layer and the second adhesive layer without effectively suppressing displacement between them. Further, as bonding is performed with the adhered parts as positioning reference, it is possible to simplify the positioning and also simplify the bonding step (increase the efficiency of the bonding step).

### [EXAMPLE 5]

The following description is made about an example 5. Here, the electrophoresis display device was manufactured by the method described below.

### <THERMOPLASTIC MATERIAL LAYER FORMING STEP>

The thermoplastic material (hot melt resin) was applied to the base material (PET film with remover) with the film thickness of 12 µm by use of a comma roll and the material was dried.

### <CELL FORMING STEP>

Acrylate resist film was bonded to the first electrode substrate (ITO-PET film) by a laminator and the photoresist method was used to form the structure.

### <CONTACT STEP>

The thermoplastic material layer on the surface of the base material was brought into contact with the upper surface of the structure provided on the surface of the first electrode substrate.

### <ADHESIVE LAYER TRANSFERRING STEP>

The first electrode substrate and the base material were subjected to heating by a thermal laminator at 120 °C and the base material in a heated state was peeled off and thereby a part of the thermoplastic material layer formed on the surface of the base material was transferred to the upper surface of the structure. The film thickness of the adhesive layer transferred on the upper surface of the structure was about 6 t 8 µm.

### <ELECTROPHORESIS INK FILLING STEP >

Then, after the thermoplastic materials formed on the upper surface of the structure was cured, the electrophoresis ink was applied to the ITO-PET film with use of a die coater and thereby the cells by the structure were filled with the electrophoresis ink. After the electrophoresis ink was applied, the upper surface of the structure was observed. Then, it was found that the thermoplastic material formed on the upper surface of the structure was not miscible or did not flow but remained.

Next, the ultraviolet cure adhesive agent was formed on the outer periphery of each of the parts where the electrophoresis ink is applied (cell formed parts).

### <SUBSTRATE BONDING STEP>

Next, the second electrode substrate (FPC substrate) and the ITO-PET film applied with the electrophoresis ink were heated by the thermal laminator at 80 °C and bonded to each other. Then, the ultraviolet light was applied to the outer periphery of each of the cell formed parts to cure the ultraviolet cure adhesive agent. By this process, the electrophoresis display panel was manufactured.

The disclosures of Japanese Patent Application No. 2010-111941 filed on May 14, 2010, Japanese Patent Application No. 2010-134957 filed on June 14, 2010, Japanese Patent Application No. 2010-172673 filed on July 30, 2010, Japanese Patent Application No. 2010-173713 filed on August 2, 2010 and Japanese Patent Application No. 2010-184979 filed on August 20, 2010, including the specification, drawings, and abstract, are incorporated herein by reference in its entirety.

## Claims

1. A method for manufacturing an electrophoresis display device, the method comprising the steps of:
forming a plurality of cells on a first electrode substrate, each of the cells being composed of an insulating structure provided on the first electrode substrate in a standing manner;
heating a film base material with a thermoplastic adhesive layer formed on a surface thereof, in such a state that the film base material is in contact with an upper surface of the structure and peeling the film base material in such a state that the adhesive layer is softened, thereby transferring the adhesive layer to the upper surface of the structure;
filling the cells with electrophoresis ink; and
bonding the upper surface of the structure and a second electrode substrate to each other while heating the upper surface and the second electrode substrate at a temperature lower than that in the step of transferring the thermoplastic adhesive layer to the upper surface of the structure.

2. The method of claim 1, wherein in the step of bonding the upper surface of the structure to the second electrode substrate, the second electrode substrate is heated in a selective manner.

3. A method for manufacturing an electrophoresis display device, the method comprising the steps of:
forming a plurality of cells on a first electrode substrate, each of the cells being composed of an insulating structure provided on the first electrode substrate in a standing manner;
forming a first adhesive layer on upper surface of the structure;
filling the cells with electrophoresis ink;
forming a second adhesive layer on a second electrode layer with a pattern that is approximately same as a pattern of the upper surface of the structure; and
bonding the first electrode substrate and the second electrode substrate to each other by placing the first electrode substrate and the second electrode substrate opposite to each other and adhering the first adhesive layer to the second adhesive layer.

4. An electrophoresis display device comprising:
a first electrode substrate;
a plurality of cells formed by an insulating structure provided on the first electrode substrate in a standing manner;
a first adhesive layer provided on an upper surface of the structure;
a second electrode substrate;
a second adhesive layer formed on a surface of the second electrode substrate with a pattern which is approximately same as a pattern of the upper surface of the structure; and
electrophoresis ink charged in the cells,
wherein the electrophoresis ink is sealed in the cells by adhering the first adhesive layer formed on the upper surface of the structure to the second adhesive layer formed on the surface of the second electrode substrate.

5. A method for manufacturing an electrophoresis display device, the method comprising the steps of:
forming a plurality of cells on a first electrode substrate, each of the cells being composed of an insulating structure provided on the first electrode substrate in a standing manner;
forming a first adhesive layer on an upper surface of the structure;
bringing a second electrode substrate into contact with the upper surface of the structure with the first adhesive layer formed thereon;
forming a second adhesive layer on a surface of the second electrode substrate by peeling the second electrode substrate from the upper surface of the structure and transferring a part of the first adhesive layer formed on the upper surface of the structure to the surface of the second electrode substrate;
filling the cells with electrophoresis ink; and
bonding the first electrode substrate and the second electrode substrate to each other by placing the first electrode substrate and the second electrode substrate opposite to each other and adhering the first adhesive layer to the second adhesive layer.

6. The method of claim 5, wherein the step of forming the first adhesive layer on the upper surface of the structure is performed by bringing a base material with an adhesive layer formed on a surface thereof into contact with the upper surface of the structure and then, peeling off the base material from the upper surface of the structure thereby to transfer a part of the adhesive layer formed on the surface of the base material to the upper surface of the structure.

7. The method of claim 5, wherein the first adhesive layer in the step of filling the cells with the electrophoresis ink is more cured than the first adhesive layer in the step of bringing the second electrode substrate into contact with the upper surface of the structure with the first adhesive layer formed thereon.

8. A method for manufacturing an electrophoresis display device, the method comprising the steps of:
forming a plurality of cells on a first electrode substrate, each of the cells being composed of an insulating structure provided on the first electrode substrate in a standing manner;
forming a first adhesive layer on an upper surface of the structure;
bringing a second electrode substrate into contact with the upper surface of the structure with the first adhesive layer formed thereon, and then, adhering a part of the first electrode substrate to a part of the second electrode substrate;
forming a second adhesive layer on a surface of the second electrode substratebypeelingnot-adheredparts of the secondelectrode substrate from the upper surface of the structure and transferring a part of the first adhesive layer formed on the upper surface of the structure to the surface of the second electrode substrate;
filling the cells with electrophoresis ink in a state that the part of the first electrode substrate and the part of the second electrode substrate are adhered to each other; and
bonding the first electrode substrate and the second electrode substrate to each other by adhering the first adhesive layer to the second adhesive layer.

9. The method of claim 8, wherein in the step of bonding the first electrode substrate to the second electrode substrate, positioning of the first electrode substrate and the second electrode substrate is performed with reference to an adhered part.

10. The method of claim 8, wherein
the method further comprises the step of forming a photocurable adhesive agent on a predetermined area of the first electrode substrate and/or the second electrode substrate, before the step of adhering the part of the first electrode substrate to the part of the second electrode substrate, and
after the second electrode substrate is brought into contact with the upper surface of the structure with the first adhesive layer formed thereon, the photocurable adhesive agent is exposed to ultraviolet radiation thereby to adhere the part of the first electrode substrate and the part of the second electrode substrate to each other.

11. The method of claim 8, wherein the step of forming the first adhesive layer on the upper surface of the structure is performed by bringing a base material with an adhesive layer formed thereon into contact with the upper surface of the structure and then, peeling the base material from the upper surface of the structure thereby to transfer a part of the adhesive layer formed on the surface of the base material to the upper surface of the structure.

12. A method for manufacturing a base material provided with an adhesive layer, the method comprising the steps of:
forming a structure on a surface of a first base material
forming a thermoplastic material layer made of a thermoplastic material on a surface of a second base material;
bringing the thermoplastic material layer formed on the surface of the second base material into contact with an upper surface of the structure provided on the surface of the first base material in a standing manner;
bonding the structure to the thermoplastic material layer by heating the thermoplastic material layer; and
peeling off the second base material from the first base material in a state that the thermoplastic material layer is heated and thereby, transferring the thermoplastic material layer to the upper surface of the structure.

13. The method of claim 12, wherein in the step of bonding the structure to the thermoplastic material layer, a heating temperature is equal to or higher than a softening temperature of the thermoplastic material layer.

14. The method of claim 12, wherein in the step of transferring the thermoplastic material layer to the upper surface of the structure, a heating temperature is equal to or higher than a softening temperature of the thermoplastic material layer.

15. The method of claim 12, wherein in the step of transferring the thermoplastic material layer to the upper surface of the structure, a temperature of the second base material is higher than a temperature of the first base material.

16. The method of claim 12, wherein in the step of bonding the structure to the thermoplastic material layer, the first base material and the second base material are pressed against each other by an external load.
